(19)

Europäisches Patentamt
European Patent Office
Office européen des brevets

(11) **EP 2 990 759 A1**

(12) **EUROPEAN PATENT APPLICATION**

(43) Date of publication:
  **02.03.2016 Bulletin 2016/09**

(51) Int Cl.:
  **G01B 11/24** *(2006.01)*   **G01B 21/04** *(2006.01)*

(21) Application number: **15181066.0**

(22) Date of filing: **14.08.2015**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**
  Designated Validation States:
  **MA**

(30) Priority: **14.08.2014 JP 2014165098**

(71) Applicant: **CANON KABUSHIKI KAISHA
  Ohta-ku
  Tokyo 146-8501 (JP)**

(72) Inventor: **Maeda, Atsushi
  Ohta-ku, Tokyo (JP)**

(74) Representative: **Walker, Philip Martin
  Canon Europe Ltd
  European Patent Department
  3 The Square
  Stockley Park
  Uxbridge, Middlesex UB11 1ET (GB)**

(54) **SHAPE MEASUREMENT METHOD AND SHAPE MEASUREMENT APPARATUS**

(57)   A reference surface (11a) is moved, relative to an optical system (14), to a plurality of placement positions, and a wavefront of reflected light from a reference surface (11a) is measured at the respective placement positions by a detection unit (9). Based on information on the wavefront measured at the respective placement positions and information on the optical system, a plurality of pieces of shape data of the reference surface (11a) are calculated. Thereafter, a wavefront of reflected light from a measurement target surface (12a) is measured, and temporary shape data of the measurement target surface (12a) is calculated. Error data is calculated based on a relationship between the plurality of placement positions and the plurality of pieces of shape data at the respective positions, and the error data is removed from the temporary shape data thereby determining shape data of the measurement target surface (12a).

FIG. 1A

**(Cont. next page)**

EP 2 990 759 A1

FIG. 1B

**Description**

BACKGROUND OF THE INVENTION

Field of the Invention

The present invention relates to shape measurement in evaluation of an optical element.

Description of the Related Art

In recent years, it has been common to use an aspheric optical element in an optical apparatus such as a camera, an optical drive, an exposure apparatus, or the like. An increase in the degree of precision of these optical apparatuses leads to a need for the aspheric optical element to have a higher-precision shape. To realize a high-precision shape in such an aspheric optical element, it is necessary to precisely measure the shape of the aspheric optical element. As one of techniques of measuring the shape of optical elements of such a type, it has been proposed to use a Shack-Hartmann sensor to measure the shape of a lens to be measured based on a difference in shape between a reference surface of a reference lens and a surface to be measured of the lens to be measured (see, for example, Japanese Patent Laid-Open No. 2012-132682).

In the measurement of the shape using this type of wavefront sensor, first, a reference surface of a reference lens (the reference surface formed on the reference lens) is illuminated with light. The reference surface of the reference lens is formed based on a design shape of a surface to be measured (hereinafter also referred to as a measurement target surface) of a lens to be measured (hereinafter also referred to as a measurement target lens), and thus the shape thereof is known. Light reflected from the reference surface is incident on a Shack-Hartmann sensor via an image forming lens. The Shack-Hartmann sensor is disposed in its image plane. As is well known, the Shack-Hartmann sensor is a wavefront sensor including an image sensor and a microlens array, and the wavefront of reflected-light is measured using the Shack-Hartmann sensor.

Next, the reference lens is replaced by a measurement target lens such that the position of the measurement target surface is aligned such that the wavefront of reflected light from the measurement target surface formed on the measurement target lens is close to the wavefront of reflected light from the reference surface as possible, that is, such that the measurement target surface is located as the same position of the reference surface. Thereafter, the wavefront of reflected light via the image forming lens is measured by the Shack-Hartmann sensor. A difference in shape between the reference surface and the measurement target surface is calculated from the two wavefronts, and the known shape of the reference surface is added to the calculated difference in shape thereby obtaining the shape of the measurement target surface.

In the technique described above, the optical measurement system, for example, the image forming lens, has a finite aberration, and thus when the wavefront of reflected light from the measurement target surface is formed on the Shack-Hartmann sensor, it includes an error caused by the aberration in addition to information associated with the shape of the measurement target surface. The same image forming lens is used in measuring the reference surface, which is placed at the same location as the location of the measurement target surface, and thus the wavefront of reflected light from the reference surface also includes the same error caused by the aberration of the image forming lens. In the technique disclosed in Japanese Patent Laid-Open No. 2012-132682, the influence of the aberration is deleted based on the difference between the wavefront of reflected light from the measurement target surface and the wavefront of reflected light from the reference surface.

In the technique disclosed in Japanese Patent Laid-Open No. 2012-132682, it is assumed that the measurement target surface is aligned such that it is placed at the same location as that of the reference surface. However, to perform the alignment in such a manner, it takes a rather long time in a range from about 10 seconds to several ten seconds, which leads to a problem of a long measurement tact. Furthermore, in the technique disclosed in Japanese Patent Laid-Open No. 2012-132682, when the alignment is not accurate enough, a difference occurs in terms of the error caused by the aberration of the image forming lens between that for the wavefront of reflected light from the measurement target surface and the wavefront of reflected light from the reference surface. This difference in error makes it difficult to correctly remove the influence of the aberration, based on the difference between the two wavefronts. That is, a reduction in measurement accuracy occurs.

To handle the above-described situation, the invention provides a technique to reduce a shape measurement error caused by an aberration of an image forming lens varying depending on the position of a measurement target surface, thereby making it possible to measure a shape of the measurement target surface with high accuracy without performing alignment of the measurement target surface or regardless of alignment accuracy of the measurement target surface.

## SUMMARY OF THE INVENTION

The present invention in a first aspect provides a shape measurement method as specified in claims 1 to 11.

The present invention in a second aspect provides a shape measurement program as specified in claim 12.

The present invention in a third aspect provides a computer-readable storage medium as specified in claim 13.

The present invention in a fourth aspect provides a method of producing an optical element as specified in claims 14 and 15.

The present invention in a fifth aspect provides a shape measurement apparatus as specified in claim 16.

Further features of the present invention will become apparent from the following description of embodiments with reference to the attached drawings.

## BRIEF DESCRIPTION OF THE DRAWINGS

Fig. 1A is a schematic diagram illustrating a configuration of a shape measurement apparatus usable to execute a shape measurement method according to an embodiment, and Fig. 1B is a diagram illustrating placement error components that may occur in the shape measurement apparatus.

Fig. 2 is a flow chart illustrating a process of measuring a shape of a measurement target surface according to a first embodiment.

Fig. 3 is a flow chart illustrating a process of measuring a shape and deriving an error function according to a second embodiment.

Fig. 4 is a flow chart illustrating a process of measuring a shape and deriving an error function according to a fourth embodiment.

Fig. 5 is a flow chart illustrating a process of measuring a shape of as measurement target surface according to a fifth embodiment.

## DESCRIPTION OF THE EMBODIMENTS

Embodiments of the present invention are described below with reference to drawings.

### First Embodiment

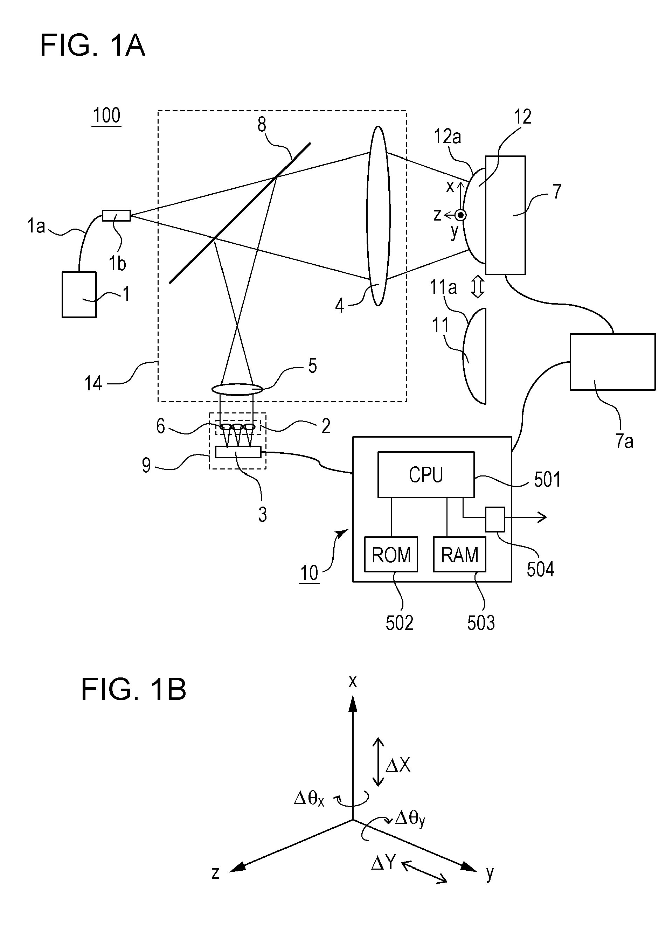

Fig. 1A schematically illustrates a configuration of a measurement apparatus 100 according to a first embodiment. The measurement apparatus 100 measures the shape of a measurement target surface 12a formed on a measurement target lens 12 by using a reference lens 11 with a reference surface 11a formed thereon. In the present embodiment, it is assumed by way of example but not limitation that the measurement target surface is an axisymmetric aspherical surface formed based on a design shape governed by a piston component, a spherical surface component, and a spherical aberration component.

The measurement apparatus 100 includes, as illustrated in Fig. 1A, a light source 1, lenses 4 and 5, a stage 7, a stage controller 7a, a half mirror 8, a detection unit 9 having a detection surface, and a processing unit 10.

In the measurement apparatus 100, the lens 4 forms an optical system through which the reference surface 11a of the reference lens 11 or the measurement target surface 12a of the measurement target lens is to be illuminated with illumination light emitted from the light source 1. A combination of the lenses 4 and 5 and the half mirror 8 functions as an optical system that directs reflected light from the measurement target surface 12a of the measurement target lens to the detection unit 9. The stage 7 moves the reference lens 11 (the reference surface 11a) or the measurement target lens 12 (the measurement target surface 12a) under the control of the stage controller 7a. More specifically, the stage 7 is adapted to shift in a direction perpendicular to a measurement optical axis of the measurement apparatus 100, shift in a direction parallel to the optical axis, and/or tilt in a plane perpendicular to the optical axis.

The illumination light from the light source 1 is output in the form of a spherical wave from a fiber connector 1a via a single-mode fiber 1b and then passes through the half mirror 8. The illumination light is then converted into convergent light via the lens 4. The convergent light is reflected by the reference surface 11a or the measurement target surface 12a and then passes through the lens 4 and is further reflected by the half mirror 8. The convergent light is finally converted by the lens 5 into parallel light and is incident on the detection unit 9. In this situation, the image of reflected light from the reference surface 11a or the measurement target surface 12a is formed on the detection unit 9 through the lenses 4 and 5 and the half mirror 8, that is, a combination of these elements functions as an imaging optical system (hereinafter referred to as an image forming lens 14). This makes possible for the wavefront of light incident on the detection unit 9 to be within a dynamic range of the detection unit and thus to be detectable by the detection unit 9 even when the measurement target surface 12a has a large asphericity. In a case where the asphericity of the measurement target surface 12a is not significantly large, it may be allowed that there is a small deviation of the position of the detection unit 9 from the image plane.

In the present embodiment, a monochromatic laser is used as the light source 1. However, alternatively, a light emitting diode or any other suitable light source may be employed. The focus distance and the effective diameter (the diameter) of each of the lenses 4 and 5 are determined by the effective diameter and the radius of curvature of the measurement target surface 12a and the size (the dimension) of the detection surface of the detection unit 9.

The distance between the lens 4 and the measurement target lens 12 is set such that light emerging from the lens 4 converges at a point close to the center of curvature of a paraxial region on the measurement target surface 12a. Note that the light ray angle of the reflected light on the measurement target surface 12a depends on the asphericity (the degree of deviation from a spherical surface) or a shape error of the measurement target surface 12a. Therefore, when the measurement target surface 12a has a large asphericity, there is a large difference between the light ray angle of the reflected light on the measurement target surface 12a and the light ray angle of the incident light on the measurement target surface 12a.

The detection unit 9 may be realized using a wavefront sensor such as a Shack-Hartmann sensor. The Shack-Hartmann sensor is suitable to process digital data and, in recent years, Shack-Hartmann sensors have been relatively easily available, which allows it to easily realize the detection unit 9 at low cost.

The detection unit 9 using the Shack-Hartmann sensor includes a microlens array 2 including a large number of small condensing lenses 6 arranged in a matrix form, and a photosensor 3 realized by a two-dimensional photosensor such as a CCD sensor. Incident light on the detection unit 9 is split via the microlens array 2 into pieces corresponding to the respective small condensing lenses, and focused on the photosensor 3. The distribution of the incident angle of the light on the photosensor 3 functioning as the detection surface of the detection unit 9 may be determined by detecting a difference between the position of a spot at which the light is focused through each small condensing lens 6 and the position of the optical axis of the small condensing lens 6. The position of the optical axis of each small lens 6 may be calibrated in advance, for example, by measuring the position of a corresponding spot formed when parallel light is incident.

When light is treated as an electromagnetic wave, its equiphase wave surface corresponds to a wavefront, and normal to the wavefront corresponding to a light ray. That is, there is a one-to-one correspondence between the wavefront and the light ray angle distribution. Therefore, detecting the angle distribution of the light incident on the photosensor 3 of the detection unit 9 is equivalent to detecting the wavefront of the light.

The detection surface of the detection unit 9 composed by the wavefront sensor is disposed in a plane conjugate to the measurement target surface 12a such that the image of the reflected light from the measurement target surface 12a is formed on the detection surface. Note that the detection unit 9 is not limited to the Shack-Hartmann sensor, but other types of sensors may be used as the detection unit 9 as long as it is possible to detect the wavefront or the angle distribution. For example, the detection unit 9 may be realized by a shearing interferometer or a Talbot interferometer using a diffracting grating and a CCD sensor. Alternatively, the detection unit 9 may be a simple a photosensor and a reference surface may be provided between the lens 4 and the measurement target lens 12 so as to form a Fizeau interferometer thereby detecting reflected light from the measurement target surface 12a as an interference pattern.

The processing unit 10 includes a CPU 501 and a memory such as a ROM (a program memory) 502, a RAM 503, or the like. A signal output from the photosensor 3 of the detection unit 9 is input to the processing unit 10 via a not-illustrated interface, and the processing unit 10 outputs, to the stage controller 7a, position control information on the reference lens 11 and the measurement target lens 12.

Based on a detection result provided by the detection unit 9, the processing unit 10 performs a process (a measurement process) to determine the surface shape of the measurement target surface 12a. To perform the measurement process, information is necessary as to shapes and positions of the lenses 4 and 5 forming the image forming lens 14 and those of the half mirror 8. Data of the information described above may be stored in a particular storage area of, for example, the ROM 502 (or the RAM 503). The processing unit 10 also functions as a control unit that controls the whole measurement apparatus 100. For example, the CPU 501 aligns the reference lens 11 by controlling the movement of the stage controller 7a, as described in further detail later.

The processing unit 10 further includes a communication unit 504 including a network interface according to, for example, IEEE802.3 standard, or the like. The CPU 501 is capable of transmitting, to an apparatus, a result of the measurement of the shape of measurement target surface 12a or a result of evaluation of the measurement target lens 12 based on the result of the shape measurement, wherein the apparatus may be located in a production plant in which the measurement apparatus 100 is installed, and the transmission is performed via the communication unit 504.

The reference lens 11 is a lens produced according to the same design values as those of the measurement target lens 12 so as to have the same design shape as that of the measurement target lens 12. The reference surface 11a formed on the reference lens 11 is measured precisely in advance using a measurement apparatus such as a probe-type measurement apparatus or the like other than the measurement apparatus 100. The measured surface shape data

$z_b(x, y)$ of the reference surface 11a is stored in the ROM 502 (or the RAM 503). The wavefront that will be incident on the detection unit 9 is calculated in advance by ray tracing analysis or the like for a case in which the reference surface 11a is located in the plane conjugate to the detection unit 9 and the aspheric axis thereof is located on the measurement optical axis of the measurement apparatus 100. The calculated wavefront data is stored in advance as the design wavefront in the ROM 502(or the RAM 503) of the processing unit 10.

As is illustrated near the central of the measurement target lens 12 in Fig. 1A, the origin of a three-dimensional xyz coordinate system of the apparatus (an apparatus coordinate system) is defined at an intersection between the conjugate plane of the detection unit 9 and the measurement optical axis, and a z direction is defined in a direction parallel to the measurement optical axis, and x and y directions are defined in directions perpendicular to the measurement optical axis.

With the measurement apparatus configured in the above-described manner, the shape measurement may be performed as follows. First, a Zernike function used in the present embodiment is defined as follows. Note that in the following definition, $r^2 = x^2 + y^2$.

$$Z_1(x, y) = 1$$
$$Z_2(x, y) = x$$
$$Z_3(x, y) = y$$
$$Z_4(x, y) = 2r^2 - 1$$
$$Z_5(x, y) = 2x^2 - y^2$$
$$Z_6(x, y) = 2xy$$
$$Z_7(x, y) = (-2 + 3r^2)x$$
$$Z_8(x, y) = (-2 + 3r^2)y$$
$$Z_9(x, y) = (1 - 6r^2 + 6r^4)$$
$$Z_{10}(x, y) = x^3 - 3xy^2$$
$$Z_{11}(x, y) = 3x^2y - y^3$$
$$Z_{12}(x, y) = (-3 + 4r^2)(x^2 - y^2)$$
$$Z_{13}(x, y) = 2(-3 + 4r^2)xy$$
$$Z_{14}(x, y) = (3 - 12r^2 + 10r^4)x$$
$$Z_{15}(x, y) = (3 - 12r^2 + 10r^4)y$$
$$Z_{16}(x, y) = -1 + 12r^2 - 30r^4 + 20r^6$$
$$Z_{17}(x, y) = x^4 - 6x^2y^2 + y^4$$
$$Z_{18}(x, y) = 4xy(x^2 - y^2)$$
$$Z_{19}(x, y) = (-4 + 5r^2)(x^3 - 3xy^2)$$
$$Z_{20}(x, y) = (-4 + 5r^2)(3x^2y - y^3)$$
$$Z_{21}(x, y) = (6 - 20r^2 + 15r^4)(x^2 - y^2)$$
$$Z_{22}(x, y) = 2(6 - 20r^2 + 15r^4)xy$$
$$Z_{23}(x, y) = (-4 + 30r^2 - 60r^4 + 35r^6)x$$
$$Z_{24}(x, y) = (-4 + 30r^2 - 60r^4 + 35r^6)y$$
$$Z_{25}(x, y) = 1 - 20r^2 + 90r^4 - 140r^6 + 70r^8$$
$$Z_{26}(x, y) = x^5 - 10x^3y^2 + 5xy^4$$
$$Z_{27}(x, y) = 5x^4y - 10x^2y^3 + 5y^5$$
$$Z_{28}(x, y) = (-5 + 6r^2)(x^4 - 6x^2y^2 + y^4)$$
$$Z_{29}(x, y) = 4(-5 + 6r^2)xy(x^2 - y^2)$$
$$Z_{30}(x, y) = (10 - 30r^2 + 21r^4)(x^3 - 3xy^2)$$
$$Z_{31}(x, y) = (10 - 30r^2 + 21r^4)(3x^2y - y^3)$$
$$Z_{32}(x, y) = (-10 + 60r^2 - 105r^4 + 56r^6)(x^2 - y^2)$$
$$Z_{33}(x, y) = 2(-10 + 60r^2 - 105r^4 + 56r^6)xy$$
$$Z_{34}(x, y) = (5 - 60r^2 + 210r^4 - 280r^6 + 126r^8)x$$
$$Z_{35}(x, y) = (5 - 60r^2 + 210r^4 - 280r^6 + 126r^8)y$$
$$Z_{36}(x, y) = -1 + 30r^2 - 210r^4 + 560r^6 - 630r^8 + 252r^{10}$$

$$(1)$$

Furthermore, a placement error and a placement component are defined as follows. In Fig. 1A, the measurement target surface 12a and the reference surface 11a are both formed so as to have an axisymmetric aspherical surface according to a design shape, and thus an aspheric axis exists in each of the measurement target surface 12a and the reference surface 11a. In each case of the measurement target surface 12a and the reference surface 11a, the shape thereof is defined in the xyz coordinate system whose origin is located at the intersection (the vertex) between the aspheric axis and the aspheric surface and whose z axis is defined by the aspheric axis. Therefore, if the vertex of the aspheric surface is at a location shifted from the origin of the apparatus coordinate system or if an aspheric axis is located shifted from the z axis of the apparatus coordinate system, then a measurement error occurs. For example, when an aspheric surface is produced based on a design shape $z_{des}(r)$, if the aspheric surface is placed such that the location is shift in the x direction by $\Delta x$ and in the y direction by $\Delta y$, rotated by $\Delta\theta_x$ about the x axis and by $\Delta\theta_y$ about the y axis, then the shape output by the measurement apparatus has an error described below.

$$\Delta z_{set}(x,y) \approx \frac{\partial z_{des}(r)}{\partial x}\Delta x + \frac{\partial z_{des}(r)}{\partial y}\Delta y + y\Delta\theta_x + x\Delta\theta_y \qquad (2)$$

The piston component, the spherical surface component, and the spherical aberration component respectively correspond to $Z_1$, $Z_4$, and $Z_9$ in the Zernike function, and thus $z_{des}(r)$ governed by these components is represented as follows.

$$z_{des}(r) \approx c_{1,des}Z_1(x,y) + c_{4,des}Z_4(x,y) + c_{9,des}Z_9(x,y) \qquad (3)$$

From equations (1) to (3), $\Delta z_{set}(x, y)$ is represented using a radius R of a region to be measured of the measurement target surface 12a as follows.

$$\begin{aligned}\Delta z_{set}(x,y,\Delta x,\Delta y,\Delta\theta_x,\Delta\theta_y) &= \left[a_1 Z_2(x/R,y/R) + a_2 Z_7(x/R,y/R)\right]\Delta x \\ &+ \left[a_1 Z_3(x/R,y/R) + a_2 Z_8(x/R,y/R)\right]\Delta y \\ &+ RZ_3(x/R,y/R)\Delta\theta_x + RZ_2(x/R,y/R)\Delta\theta_y \\ &= \sum_{n=2,3,7,8} c_n Z_n(x/R,y/R) \\ &= \Delta z_{set}(x,y,c_2,c_3,c_7,c_8) \end{aligned} \qquad (4)$$

where coefficients are given as follows:

$$a_1 = 8c_{9,des}/3 + 4c_{4,des} - 12,$$

$$a_2 = 4c_{9,des}/3,$$

and thus

$$\begin{pmatrix} \Delta x \\ \Delta y \\ \Delta\theta_x \\ \Delta\theta_y \end{pmatrix} = \frac{1}{a_2 R} \begin{pmatrix} 0 & 0 & R & 0 \\ 0 & 0 & 0 & R \\ 0 & a_2 & 0 & -a_1 \\ a_2 & 0 & -a_1 & 0 \end{pmatrix} \begin{pmatrix} c_2 \\ c_3 \\ c_7 \\ c_8 \end{pmatrix} \qquad (5)$$

That is, $\Delta z_{set}(x, y)$ is approximately given by the linear sum of $Z_2(x, y)$ (x tilt component), $Z_3(x, y)$ (y tilt component), $Z_7(x, y)$ (x coma aberration component), and $Z_8(x, y)$ (y coma aberration component). In the present embodiment, $\Delta x$, $\Delta y$, $\Delta\theta_x$, and $\Delta\theta_y$ are defined as "placement errors" (see Fig. 1B). Furthermore, components proportional to four terms $Z_2$, $Z_3$, $Z_7$, and $Z_8$ of the Zernike function are defined as "placement components". The placement error may occur, for example, when a fixture for use in placing the measurement target lens 12 in the shape measurement apparatus 100 has an error in its shape, or when the measurement target surface 12a is eccentric on the measurement target lens 12. In the present embodiment, it is assumed that the measurement target surface 12a is placed with following placement error components: about 400 $\mu$m for $\Delta x$ and $\Delta y$; and about 0.2° for $\Delta\theta_x$ and $\Delta\theta_y$. Instead of $Z_7$ and $Z_8$, components respectively proportional to $\partial z_{des}/\partial x$ and $\partial z_{des}/\partial y$ may be employed as placement components. The placement components vary depending on the placement errors. Therefore, in the present embodiment, the placement components are not to be measured, and measurement target surface shape data is output after it is corrected so as to include no placement component.

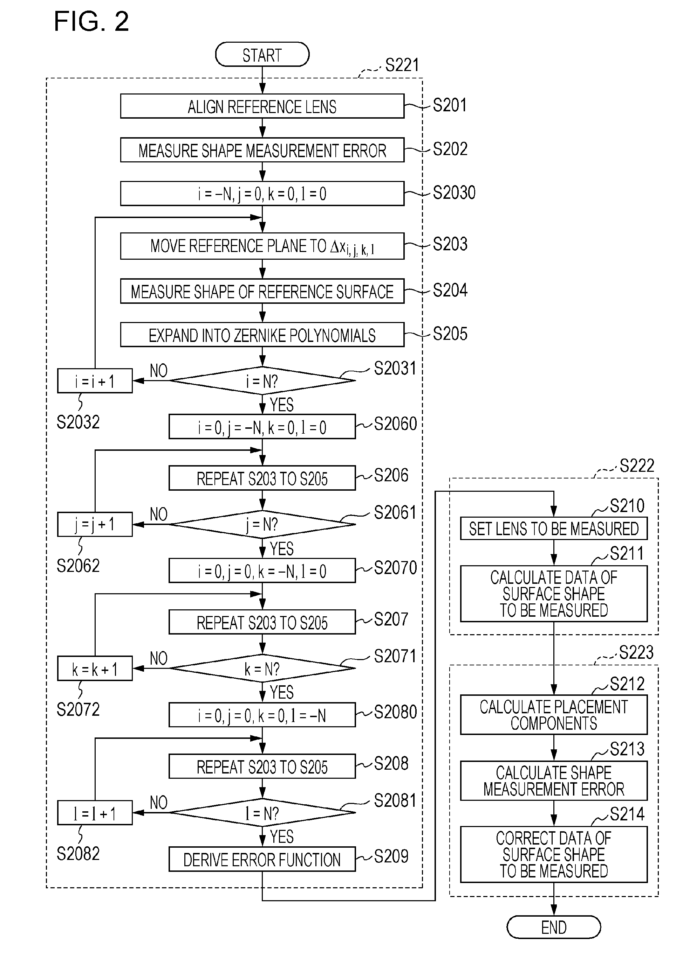

Fig. 2 is a flow chart illustrating a measurement procedure according to the present embodiment. The measurement procedure illustrated in Fig. 2 is executed by the CPU 501. The measurement procedure illustrated in Fig. 2 is stored in advance as a control program of the CPU 501 in the ROM 502 (or another not-illustrated storage apparatus such as an HDD).

In the present embodiment, in particular in the control procedure in Fig. 2, when the reference surface 11a is measured, the reference lens 11 is aligned at a predetermined measurement position on the stage 7. However, in the control procedure according to the present embodiment, as for the measurement of the measurement target surface 12a, it is not necessary to perform precise alignment of the measurement target lens 12.

In the control procedure illustrated in Fig. 2, part S221 (a first wavefront measurement process and a reference surface calculation process) is first performed to determine the error function $\Delta z_{err}$ representing a relationship between the placement components and the shape measurement errors by measuring the reference lens 11. Thereafter, part S222 (a second wavefront measurement process and a temporary shape data calculation process) is performed to measure the shape of the measurement target surface 12a and then part S223 (a placement component calculation process, an error calculation process, a correction process) is performed to correct the shape data acquired in the part S222. Each part according to the present embodiment is described below.

In the part S222 to measure the shape of the measurement target surface, to make it possible to quickly measure the shape of the measurement target surface, the measurement target surface is placed on the stage 7 without performing precise alignment. Thereafter, a light ray is traced in a reverse direction based on the light ray angle distribution measured by the detection unit 9 to determine temporary measurement target surface shape data $z'_s(x, y)$. The trace of the light ray is performed using information on the positions and shapes of the elements of the image forming lens 14 stored in advance in the memory (the ROM 502 or the RAM 503) of the processing unit 10.

However, the temporary measurement target surface shape data obtained here includes two errors. One is a placement component $\Delta z_{set}$ caused by the placement error. In the present embodiment, the measurement target surface 12a is not precisely aligned as described above, and thus a placement error occurs, which causes the shape measurement data to include a placement component as represented in equation (4). The other one is a shape measurement error $\Delta z_{sys}$ originating from the measurement apparatus 100. $\Delta z_{sys}$ is mainly caused by a ray tracing error caused by an aberration of the image forming lens 14. Although the ray tracing is performed based on the information on the image forming lens 14 stored in the processing unit 10, the information may include an error.

For example, in a case where a design value is used as the information, the information includes a production error. In a case where measurement is performed in advance and a resultant measurement value is used as the information, the information includes a measurement error. As a result, when the temporary shape data $z'_s(x, y)$ of the measurement target surface is determined by performing ray tracing based on the above-described information, the resultant temporary shape data $z'_s(x, y)$ includes an error $Az_{sys}$. Furthermore, the point through which the light ray passes changes depending on the position of the measurement target surface, and thus the shape measurement error $Az_{sys}$, caused by the aberration of the lens, also changes. Thus $\Delta z'_s(x, y)$ can be expanded as in equation (6) using an error function $\Delta z_{err}(x, y, C_2, C_3, C_7, C_8)$ that represents a relationship between the placement components and the shape measurement errors, and the error function $\Delta z_{err}$ is expanded as in equation (7).

$$z'_x(x, y) = z_x(x, y) + \Delta z_{err}(x, y, c_2, c_3, c_7, c_8) \qquad (6)$$

$$\Delta z_{err}(x, y, c_2, c_3, c_7, c_8) = \Delta z_{set}(x, y, c_2, c_3, c_7, c_8) + \Delta z_{sys}(x, y, c_2, c_3, c_7, c_8) \qquad (7)$$

In the present embodiment, in view of the above, the error function $\Delta z_{err}$ is introduced in the part S221 such that the error function $\Delta z_{err}$ includes both the placement component $\Delta z_{set}$ and the shape measurement error $\Delta z_{sys}$ and correctly represents how these change depending on the placement component and the placement error. To this end, while changing the position of the reference surface 11a having a known shape, the shape measurement error is determined for the reference surface 11a at a plurality of placement positions as described in further detail later. After the part S222 is completed, the part S223 is performed to calculate the shape measurement error included in $z'_s$ by using the error function $\Delta z_{err}$, and then remove the shape measurement error from $z'_s$ thereby acquiring shape data

$z_s(x, y)$ having a suppressed error.

Even if a certain time is spent to perform the part S221, there is no influence on the time spent until the calculated shape data of the measurement target surface 12a is obtained since the measurement target surface 12a is placed. Furthermore, in the present embodiment, the measurement target lens 12 is placed without performing precise alignment, and thus it is possible to greatly reduce the measurement time compared to the conventional technique in which it is necessary to align the measurement target surface at the same placement position as that of the reference surface.

Referring to a flow chart illustrated in Fig. 2, the measurement procedure according to the present embodiment is described in detail below for each step. In step S201 in Fig. 2, first, the reference lens 11 is placed on the stage 7 and the position and the inclination are aligned by moving the stage 7. More specifically, for example, CPU 501 moves the stage 7 while detecting the wavefront of reflected light from the reference surface 11a via the detection unit 9 so as to make adjustment such that the wavefront is as close to the design wavefront as possible. As a result, the reference surface 11a is placed in a plane conjugate to the detection surface of the detection unit 9, and the reference lens 11 is aligned such that the aspheric axis of the reference lens 11 is on the optical axis of the measurement apparatus 100. In this way, in the measurement of the reference surface 11a, the placement error is suppressed.

In step S202, at the measurement position at which there is no placement error immediately after the alignment, a shape measurement error data $\Delta z_{sys}(x, y, \Delta_x - 0, \Delta_y = 0, \Delta\theta_x = 0, \Delta\theta_y = 0)$ originating from the measurement apparatus 100 is determined. More specifically, first, a light ray angle distribution is detected for light reflected from the reference surface 11a and incident on the detection unit 9. Thereafter, based on the obtained light ray angle distribution and the information on the image forming lens 14, ray tracing is performed from the detection unit 9 to the reference surface and an angle distribution is determined for the light ray in a state immediately after being reflected by the reference surface. Therefrom, a distribution of the inclination angle $(\theta'_{x,b}, \theta'_{y,b})$ of the reference surface is further determined, and the inclination angle $(\theta'_{x,b}, \theta'_{y,b})$ is subjected to double integration thereby calculating the shape data $z'_b(x, y)$ of the reference surface. Thereafter, the known shape data $z_b(x, y)$ of the reference surface 11a is subtracted from the shape data $z'_b(x, y)$ thereby determining a shape measurement error data $\Delta z_{sys}(x, y, 0, 0, 0, 0)$.

As described above, the shape measurement error caused by the aberration of the image forming lens varies greatly depending on the position of the reference surface or the measurement target surface. Therefore, in a case where the measurement target surface or the reference surface has a placement error $\Delta x$, $\Delta y$, $\Delta\theta_x$, and $\Delta\theta_y$, an error $\Delta z'_{sys}(x, y, \Delta x, \Delta y, \Delta\theta x, \Delta\theta_y)$ caused by a change in aberration of the image forming lens 14 due to the placement error is added to the shape measurement error, and thus the shape measurement error data $\Delta z_{sys}$ is given by the following expression.

$$\Delta z_{sys}(x, y, \Delta x, \Delta y, \Delta\theta_x, \Delta\theta_y) = \Delta z_{sys}(x, y, 0, 0, 0, 0) + \Delta z'_{sys}(x, y, \Delta x, \Delta y, \Delta\theta_x, \Delta\theta_y)$$

$$(8)$$

That is, to acquire the shape measurement error data $\Delta z_{sys}$, it is necessary to determine error $\Delta z'_{sys}$ that occurs due to a change in aberration of the image forming lens 14 caused by the placement error.

Factors that may cause the aberration of the image forming lens include a surface shape error, a refractive index distribution, a placement error, and the like of each optical element forming the image forming lens 14. The aberration caused by the above-described factors is not high in spatial frequency, and thus the shape measurement error $\Delta z'_{sys}$ that occurs due to a change in the aberration of the image forming lens 14 caused by the placement error may be represented, for example, by the sum of low-order Zernike functions as shown below.

$$\Delta z'_{sys}(x, y, \Delta x, \Delta y, \Delta\theta_x, \Delta\theta_y) = \sum_{n=4}^{6} c_n(\Delta x, \Delta y, \Delta\theta_x, \Delta\theta_y)Z_n(x, y) + \sum_{n=9}^{36} c_n(\Delta x, \Delta y, \Delta\theta_x, \Delta\theta_y)Z_n(x, y)$$

$$(9)$$

Note that equation (9) is merely an example. In the expansion, the number of terms is not limited to 36. The function is not limited to Zernike function, and other functions may be employed. Furthermore, coefficients of equation (9) defining the shape measurement error $\Delta z'_{sys}$ that occurs due to a change in aberration of the image forming lens 14 caused by the placement error do not change at a high frequency depending on the placement error. For example, in a case where the measurement target surface has a placement error of 0.1° and the image forming lens 14 has a total length of 1 m, the placement error may cause the optical path to have a shift of about 2 mm. Compared to this amount of placement error, the space period of the aberration of the image forming lens 14 is sufficiently large, and thus a coefficient $c_n$ included in the shape measurement error $\Delta z'_{sys}$ that occurs due to a change in the aberration of the image forming lens 14 caused by the placement error may be approximated with high accuracy by a quadratic function of the placement error, for example, as shown below in equation (10).

$$c_n(\Delta x, \Delta y, \Delta \theta_x, \Delta \theta_y) = \sum_{m=1}^{2} b_{x,n,m} \Delta x^m + \sum_{m=1}^{2} b_{y,n,m} \Delta y^m + \sum_{m=1}^{2} b_{\theta x,n,m} \Delta \theta_x^m + \sum_{m=1}^{2} b_{\theta y,n,m} \Delta \theta_y^m \tag{10}$$

Therefore, first, $b_{x,n,m}$, $b_{y,n,m}$, $b_{\theta x,n,m}$, and $b_{\theta y,n,m}$, (m = 1,2, n = 4, 5, 6, 9, 10, 11, ..., 36) are determined. Thereafter, from these values, it is possible to determine the shape measurement error $\Delta z'_{sys}(x, y, \Delta x, \Delta y, \Delta \theta_x, \Delta \theta_y)$ that occurs due to a change in the aberration of the image forming lens 14 caused by the placement error, according to equations (9) and (10).

In steps S203 to S209, to determine $b_{x,n,m}$, $b_{y,n,m}$, $b_{\theta x,n,m}$, and $b_{\theta y,n,m}$ in equation (10) shown above, the reference lens 11 is actually moved via the stage 7 and the shape of the reference surface 11a is measured. In the moving of the reference lens 11, is performed such that the reference lens 11 is moved by a small distance according to a movement vector $\Delta x_{i,j,k,l}$ defined below at a time around the initial position of the reference surface 11a, and more specifically, in the present example according to the embodiment, around the measurement position at which the reference lens 11 is aligned in step S201. Each time the reference lens 11 is moved to a new movement position, the shape of the reference surface 11a is measured at that position via the wavefront measurement by the detection unit 9. Although in the present embodiment, the reference surface 11a is moved via the stage 7, the same effect may be achieved by relatively moving the measurement apparatus 100 and the reference surface 11a. Therefore, for example, a mechanism (not illustrated) for moving the whole measurement apparatus 100 may be provided and the measurement apparatus 100 may be moved while maintaining the reference surface 11a at a fixed location.

In the movement of the reference lens 11 in steps S203 to S209, the amount of movement is determined based on the maximum placement error components $\Delta X$, $\Delta Y$, $\Delta \theta_x$, and $\Delta \theta_y$ of x, y, $\theta_x$, and $\theta_y$ that may occur (is supposed to occur) in the positive or negative direction from a predetermined measurement position in the measurement of the measurement target lens 12 as illustrated in Fig. 1B. Note that the predetermined measurement position is the same position as the initial position taken after the reference lens 11 is aligned. The components of the placement error respectively correspond to the amounts of x shift, y shift, x tilt, and y tilt of the reference lens 11 or the measurement target lens 12.

Herein, to specify a movement destination, a movement vector $\Delta x_{i,j,k,l}$ is defined using $\Delta X$, $\Delta Y$, $\Delta \theta_x$, and $\Delta \theta_y$ described above as follows.

$$\Delta \mathbf{x}_{i,j,k,l} = \begin{pmatrix} \Delta x_i & \Delta y_j & \Delta \theta_{x,k} & \Delta \theta_{y,l} \end{pmatrix}$$
$$= \begin{pmatrix} \dfrac{i}{N} \Delta X & \dfrac{j}{N} \Delta Y & \dfrac{k}{N} \Delta \Theta_x & \dfrac{l}{N} \Delta \Theta_y \end{pmatrix} \tag{11}$$

where N is a parameter associated with the number of pieces of data acquired, and it may be desirable that N is an integer in the range from 1 to 10. In a case where it is desirable to perform the measurement with a further higher precision, N may be an integer greater than 10. Note that i, j, k, and 1 are arbitrary integers.

In equation (11), the movement vector $\Delta x_{i,j,k,l}$ indicates that the reference surface 11a is to be moved from the aligned position by $\Delta x_i = \Delta X_i/N$ in the x direction and $\Delta y_j = \Delta Y_j/N$ in the y direction, and the reference surface 11a is also to be rotated by $\Delta \theta_{x,k} = \Delta \theta_{xk}/N$ about the x axis and by $\Delta \theta_{y,l} = \Delta \theta_{yl}/N$ about the y axis.

In steps S203 to S209, the measurement position of the reference lens 11 is sequentially changed by moving the reference lens 11 from its initial aligned position by an amount that is determined according to equation (11) such that three of parameters i, j, k, and 1 are fixed to 0

(such that no movement is made in these directions) and the remaining one parameter is changed from -N to N.

In particular, in steps S203 to S205 in the above-described steps, the reference lens 11 is moved based on the above-described movement vector $\Delta x_{i,j,k,l}$ (S203), the shape measurement is performed at each placement position (S204), and Zernike expansion is performed (S205).

More specifically, in step S203, the reference surface 11a is moved by the stage 7 to a position indicated by the current value of the movement vector $\Delta x_{i,j,k,l}$. In step S204, an angle distribution of the light ray that is incident on the detection unit 9 after being reflected by the reference surface 11a. Furthermore, the shape data $z'_b$ of the reference surface 11a is calculated in a similar manner to step S202. For example, in a case where i is selected as a parameter to be subjected to incrementation in the process, the shape data $z'_{b,i,0,0}$ of the reference surface 11a is calculated.

In step S205, the shape difference data $z'_b$ determined in step S204 is expanded into 1st to 36th Zernike terms.

For example, in a case where parameter i is a parameter subjected to the incrementation in the process, the shape difference data $z'_{b,i,0,0}$ is subjected to the Zernike expansion.

Note that in step S2030 before step S203, parameters j, k, and 1 are fixed to 0, and parameter i is initialized to -N. Furthermore, in steps S2031 and S2032 following step S205, a determination is performed as to whether parameter i is to be incremented in the range from -N to N, and the parameter i is incremented depending on the determination.

In each of following steps S206, S207, and S208, the above-described process in steps S203 to S205 is performed repeatedly while changing one of parameters j, k, 1 from -N to N (as to j in step S206, as to k in step S207, and as to 1 in step S208) while fixing the other parameters to 0. In the iteration described above, one of parameters j, k, and 1 are initialized to -N and the other parameters are fixed to 0 in initialization steps S2060, S2070, and S2080 (as to j in step S2060, as to k in step S2070, and as to 1 in step S2080). In steps S2061 and S2062, steps S2071 and S2072, and steps S2081 and S2082, a determination is performed as to whether parameters j, k, and 1 are to be incremented in the middle of the iteration in which the parameters are changed from -N to N, and if it is affirmatively determined, parameters are incremented (as to j in steps S2061 and S2062, as to k in steps S2071 and S2072, and as to 1 in steps S2081 and S2082).

When the processing flow exits the iteration loop described above, at step S2081 after step S208, coefficients of the Zernike function are obtained for the shape data acquired at each of the placement positions at which the reference surface 11a is placed by being moved in the x, y, $\theta_x$, and $\theta_y$ directions as described above. The Zernike function including coefficients $c_{ni,j,k,l}$ in terms of $z'_{b,i,j,k,l}$ can be expressed as follows.

$$z'_{b,i,j,k,l}(x,y) \approx \sum_{n=1}^{36} c_{n,i,j,k,l} Z_n(x/R, y/R)$$

$$(12)$$

Note that in Fig. 2, if the initialization in steps S2030, S2060, S2070, and S2080 and the incrementation in steps S2032, S2062, S2072, and S2082 are performed in the manner as described above, duplicated calculations occur. In each loop controlled in the above-described manner, one of parameters i, j, k, and 1 is incremented from -N to N while the other three parameters are fixed to 0. Therefore, in the case where the process is performed in the manner as described above without any modification to handle the above situation, the reference lens 11 is moved according to the movement vector $Ax_{0,0,0,0}$, in each of steps S204, and S206 to S208, and thus the reference lens 11 is moved four times in total to the initial alignment position (the measurement position) thereof. At this position, the shape measurement error $z'_{b,0,0,0}$, is calculated under the same condition as that for $z'_b(x, y)$ determined in step S202.

To avoid the redundancy in the calculation, the shape measurement error $z'_{b,0,0,0,0}$ may not be calculated but, instead, $z'_b(x, y)$ may be used. To this end, for example, a determination step may be performed before step S203 to determine whether i, j, k, and 1 are all equal to 0, and if so, steps S203 to S205 may be skipped. In this case, the shape measurement error $z'_b(x, y)$ determined in step S202 is employed as the result of the calculation in step S205. Conversely, the acquisition of $z'_b(x, y)$ in step S202 may not be performed, but the shape measurement error $z'_{b,0,0,0,0}$ acquired in one of steps S204 and 206 to 208 may be used for the above purpose. In any case, the shape measurement error at the initial position immediately after the alignment may be acquired only once in one of steps S202, S204, and S206 to S208. Furthermore, in the present embodiment, the movement vector is defined by equation (11), and the stage is moved in step S203 by the fixed amount regardless of the value of i (or j, k, 1). But the amount of the movement of the stage in step S203 may not be fixed.

Thereafter, in step S209 in Fig. 2, $b_{x,n,m}$, $b_{y,n,m}$, $b_{\theta x,n,m}$, and $b_{\theta y,n,m}$ (m = 1, 2, n = 4, 5, 6, 9, 10, 11, ..., 36) are determined such that evaluation functions $\Delta_{x,n}$, $\Delta_{y,n}$, $\Delta\theta_{x,n}$, and $\Delta\theta_{y,n}$ defined by the following equations are minimized.

$$\Delta_{x,n} = \sum_{i=-N}^{N}\left[c_{n,i,0,0,0} - (b_{0,n} + b_{x,n,1}\Delta x_i + b_{x,n,2}\Delta x_i^2)\right]^2$$

$$\Delta_{y,n} = \sum_{j=-N}^{N}\left[c_{n,0,j,0,0} - (b_{0,n} + b_{y,n,1}\Delta y_j + b_{y,n,2}\Delta y_j^2)\right]^2$$

$$\Delta_{\theta x,n} = \sum_{k=-N}^{N}\left[c_{n,0,0,k,0} - (b_{0,n} + b_{\theta x,n,1}\Delta \theta_{x,k} + b_{\theta x,n,2}\Delta \theta_{x,k}^2)\right]^2$$

$$\Delta_{\theta y,n} = \sum_{l=-N}^{N}\left[c_{n,0,0,0,l} - (b_{0,n} + b_{\theta y,n,1}\Delta \theta_{x,l} + b_{\theta y,n,2}\Delta \theta_{y,l}^2)\right]^2$$

$$(13)$$

In this calculation, values of $\Delta x_i$, $\Delta y_j$, $\Delta\theta_{x,k}$, and $\Delta\theta_{y,l}$ are necessary. As for these value, it may be allowed to employ target values that are sent to the stage controller 7a to move the stage 7 in step S203. Alternatively, these values may be determined by substituting $c_{n,i,j,k,l}$ ($n = 2, 3, 7, 8$) obtained in equation (12) into equation (5). Furthermore, although $c_n$ is approximated by a quadratic function of the placement error in equation (10), a higher-order power function may be employed. Thus, $b_{x,n,m}$, $b_{y,n,m}$, $b\theta_{x,n,m}$, and $b\theta_{y,n,m}$ are determined in the above-described manner, and $\Delta z_{sys}(x, y, \Delta x, \Delta y, \Delta\theta_x, \Delta\theta_y)$, which represents the relationship between the placement error and the shape measurement error originating from the measurement apparatus 100, is determined according to equations (8), (9), and (10). Furthermore, by using equations (5) and (7), the error function $\Delta z_{err}(x, y, c_2, c_3, c_7, c_8)$ representing the relationship between the placement component and the shape measurement error is derived.

Thus, part S221 is finished in which the error function $\Delta z_{err}$ representing the relationship between the placement component and the shape measurement error is determined using the reference lens 11. Thereafter, part S222 is started to measure the shape of the measurement target lens 12.

First, in step S210 in part S222, the reference lens is retracted from the stage 7, and, instead, the measurement target lens 12 is placed such that the measurement target surface 12a is located in a plane conjugate to the detection surface of the detection unit 9. To place the measurement target surface 12a in the conjugate plane described above, the height of the vertex may be measured using, for example, a length measurement apparatus (not illustrated) or the like, and adjustment may be performed such that the vertex is located at the same height as that of the reference surface. Note that the aspheric axis of the reference lens 11 is adjusted so as to be approximately on the measurement optical axis. In this step, unlike in the alignment in step S201, it is not necessary to make adjustment such that the aspheric axis is precisely on the measurement optical axis, and thus the measurement target surface 12a may be placed, for example, using fixtures with which the measurement target surface 12a is brought into contact in the x and y directions. In the present embodiment, the non-necessity of the alignment of the measurement target lens 12 makes it possible to greatly reduce the time spent for the measurement at this stage of the process.

In step S211, the wavefront of the reflected light from the measurement target lens 12 is measured using the detection unit 9 and, based on the result, the temporary shape data $z'_s(x, y)$ of the measurement target surface 12a is obtained. More specifically, the light ray angle distribution of the light reflected from the measurement target surface 12a and incident on the detection unit 9 is detected. Thereafter, based on the light ray angle distribution and the information on the image forming lens 14, the ray tracing is performed from the detection unit 9 to the measurement target surface 12a to determine the angle distribution of the light ray reflected from the measurement target surface 12a. Based on the obtained angle distribution, the distribution of the inclination angle ($\theta'_{x,s}$, $\theta'_{y,s}$) of the measurement target surface is determined, and the result is subjected to the double integration thereby determining the temporary shape data $z'_s(x, y)$ of the measurement target surface 12a. This temporary shape data $z'_s(x, y)$ includes the placement error and the shape measurement error caused by the measurement apparatus 100 in particular to the aberration of the image forming lens 14 as described above.

After the (temporary) shape measurement of the measurement target surface 12a in part S222 is performed, a correction is performed in part S223 to remove the shape measurement error thereby acquiring the measurement target surface 12a.

First, in step S212 of part S223, the values of placement components included in $z'_s(x, y)$ are determined. More specifically, $c_{n,s}(n = 2, 3, 7, 8)$ are determined so as to minimize the evaluation function $\Delta_s$ defined by the following equation.

$$\Delta_s = \iint \left( z'_s(x, y) - \sum_{n=2,3,7,8} c_{n,s} Z_n(x/R, y/R) \right)^2 dxdy \qquad (14)$$

In step S213, $c_{n,s}$ ($n = 2, 3, 7, 8$) determined according to equation (14) described above are substituted into equation (7) thereby calculating the shape measurement error $\Delta z_{err}(x, y, c_{2,s}, c_{3,s}, c_{7,s}, c_{8,s})$. Herein, the error function $\Delta z_{err}(x, y, c_2, c_3, c_7, c_8)$ defined by equation (7) is a function derived in part S221 (S209) from $\Delta x_{i,j,k,l}$ indicating the position of the reference surface and the reference surface shape data $z'_{b,i,j,k,l}$ acquired at each placement position. Therefore, the process of calculating the shape measurement error by substituting the values of the placement components $c_{2,s}$, $c_{3,s}$, $c_{7,s}$, and $c_{8,s}$ into the above function is equivalent to the process of calculating the shape measurement error by referring to the relationship between the position of the reference surface 11a and the shape data.

Subsequently, in step S214, the temporary shape data $z'_s(x,y)$ of the measurement target surface determined in step S211 is corrected according to equation (6) so as to remove the error data thereby obtaining shape data $z_s(x, y)$ of the measurement target surface 12a. This shape data $z_s(x, y)$ indicates the result of the measurement of the shape of the measurement target surface 12a, and thus it is possible to evaluate the measurement target surface 12a of the measurement target lens 12 based on the shape data $z_s(x, Y)$.

The result of the measurement of the measurement target surface 12a and the result of the evaluation thereof obtained in the above-described manner may be transmitted to a production management server PC or the like via an interface such as a communication unit 504. The result of the measurement of the measurement target surface 12a and the result of the evaluation thereof may be also or alternatively transmitted to another apparatus such as a processing apparatus that re-polishes the measurement target lens 12 to control the re-processing of the measurement target lens 12.

In the shape measurement procedure according to the present embodiment, as described above, the reference surface 11a is moved, relatively with respect to the optical system, to a plurality of placement positions in the vicinity of the predetermined measurement position, and the shape data of the reference surface 11a is calculated. Based on the relationship between the plurality of placement positions and the plurality of pieces of the shape data determined at the respective placement positions, the error data is determined and the shape data of the measurement target surface obtained via the wavefront measurement is corrected using the error data thereby acquiring the corrected shape data of the measurement target surface.

Thus, suppression is achieved as to the shape measurement error due to the aberration of the optical system (the image forming lens 14) varying depending on the position of the measurement target surface, and a high-precision measurement of the shape of the measurement target surface is possible without performing alignment of the measurement target surface or regardless of the accuracy of the alignment of the measurement target surface. Furthermore, the present embodiment makes it possible to correct the error originating from the measurement apparatus including the optical system (the image forming lens 14) by using the reference surface 11a having the known shape, which makes it possible to measure the shape of the measurement target surface 12a with high precision.

Furthermore, in the present embodiment, the tilt component and the coma aberration component included in the measurement target surface shape data are corrected as placement components. This makes it possible to calculate the shape of the measurement target surface with high precision at low calculation cost. Furthermore, the shape measurement error is approximated by the Zernike function. This also makes it possible to calculate the shape of the measurement target surface with high precision at low calculation cost.

Furthermore, in the present embodiment, the shape measurement error is approximated by a power function of placement component values. This makes it possible to calculate the shape of the measurement target surface with high precision at low calculation cost. Although a second-order power function is used in the present embodiment, the shape measurement error may be approximated by a first-order power function depending on a condition, as with a third embodiment described below.

In the present embodiment, the error data ($\Delta z_{err}$) for use in correcting the shape data of the measurement target surface 12a obtained via the wavefront measurement includes, as is shown in equations (7) and (8), following components.

(1) The placement component $\Delta z_{set}$ determined in the placement component calculation process in step S202, that is, the error $\Delta Z_{set}$, is the placement component corresponding to a shape change that occurs when the design shape of the measurement target surface is relatively moved from the temporary shape data $z'_s$ calculated in step S211.

(2) The shape measurement error $\Delta z_{sys}(x, y, 0, 0, 0, 0)$ determined in step S202 that occurs when the reference surface or the measurement target surface is placed at the measurement position at which there is no placement error. That is, this shape measurement error $\Delta z_{sys}(x, y, 0, 0, 0, 0)$ is the difference between the shape data calculated from the wavefront obtained by measuring, by the detection unit 9, the light reflected, via the optical system, from the reference surface 11a at the measurement position where there is no placement error and the shape data of the reference surface.

(3) $\Delta z_{sys}$ corresponding to a change in a plurality of pieces of the shape data of the reference surface 11a calculated in the reference surface calculation process.

Now let equation (6) be rewritten as follows.

$$z_s = z'_s - \left( \Delta z_{set} + z'_b - z_b + \Delta z'_{sys} \right)$$

$$(15)$$

In the measurement procedure described above, the second term on the right side of equation (15) is first calculated and then combined with the first term. However, the order of calculation is not limited to this, but any other calculation order may be employed as long as equation (15) is correctly calculated. Alternatively, $\Delta z_{s,b} = z'_s - z'_b$ may be calculated by performing the double integration with respect to $(\theta'_{x,s} - \theta'_{x,b}, \theta'_{y,s} - \theta'_{y,b})$ and the result may be substituted into equation (15) thereby calculating the corrected shape data $z_s$. In this calculation, the measurement target surface shape data $z'_b$ and the reference surface shape data $z'_b$ are not directly calculated. However, $\Delta z_{s,b}$ includes information associated with both the reference surface and the measurement target surface, and thus $\Delta z_{s,b}$ corresponds to the shape data of the reference surface and the shape data of the measurement target surface.

In the present embodiment, the error function is determined so as to represent the relationship between the placement components included in the shape data of the reference surface 11a and the shape measurement error, and then the shape measurement error is determined from the placement components included in the temporary shape data of the measurement target surface. However, the detection surface of the detection unit 9 is conjugate to the measurement target surface or the reference surface, and thus the wavefront incident on the detection unit 9 includes the placement components described above. That is, if the expression using the Zernike function as to the wavefront incident on the detection unit 9 is compared with the expression using the Zernike function as to the shape data determined from the wavefront, it turns out that coefficients $c_n$ are substantially equal for n = 2, 3, 7, and 8.

Therefore, in determining the error function in step S209 in Fig. 2, $c_{n,i,j,k,l}$ (n = 2, 3, 7, 8) obtained by expanding the wavefront of the reflected light from the reference surface 11a into the Zernike function may be substituted into equation (5) thereby determining the placement errors, and the resultant placement errors may be substituted into equation (13). Furthermore, in determining the shape measurement errors in step S213, $c_{n,s}$ obtained by expanding the wavefront of the reflected light from the measurement target surface into the Zernike function may be substituted into equation (7). However, strictly speaking, the placement components included in the wavefront are different from the placement components included in the shape data. A correction as to the difference may be made based on ray tracing or the like.

To verify the above-described effects of the present embodiment, a shape measurement was performed according to the measurement procedure described above under the following conditions: the measurement target surface 12a was given placement errors of $\Delta x_s$ = 400 $\mu$m, $\Delta y_s$ = 300 $\mu$m, $\Delta\theta_{x,s}$ = 0.1°, and $\Delta\theta_{y,s}$ = 0.2°, and the shape of the measurement target surface 12a was measured according to the measurement procedure described above.

First, the measurement is performed using the error function $\Delta z_{err}$ with $\Delta z'_{sys}$ = 0 without performing steps S203 to S209 in Fig. 2 and without performing the alignment of the measurement target surface 12a. In this case, a shape measurement error of 36 nmRMS was observed. In contrast, in the case where the error function $\Delta z_{err}$ is calculated using the measurement procedure described above with reference to Fig. 2, the shape measurement error observed was only 11 nmRMS. That is, the measurement method according to the present embodiment makes it possible to accurately measure the shape of the measurement target surface without having to perform the alignment of the measurement target surface 12a, i.e., it is possible to perform a high-reliability measurement of the shape of the measurement target surface in a short period of time.

Second Embodiment

In the first embodiment, after the reference lens 11 is aligned precisely (step S201 in Fig. 2), the measurement thereof is performed and $\Delta z_{sys}$(x, y, 0, 0, 0, 0) is determined. Furthermore the error function $\Delta z_{err}$ is determined from $\Delta z_{sys}$(x, y, 0, 0, 0, 0). By skipping the precise alignment in the measurement of the reference lens 11, it is possible to further reduce the time spent to perform the shape measurement process. A second embodiment described below discloses a method of determining the error function $\Delta z_{err}$ without performing the precise alignment of the reference lens 11.

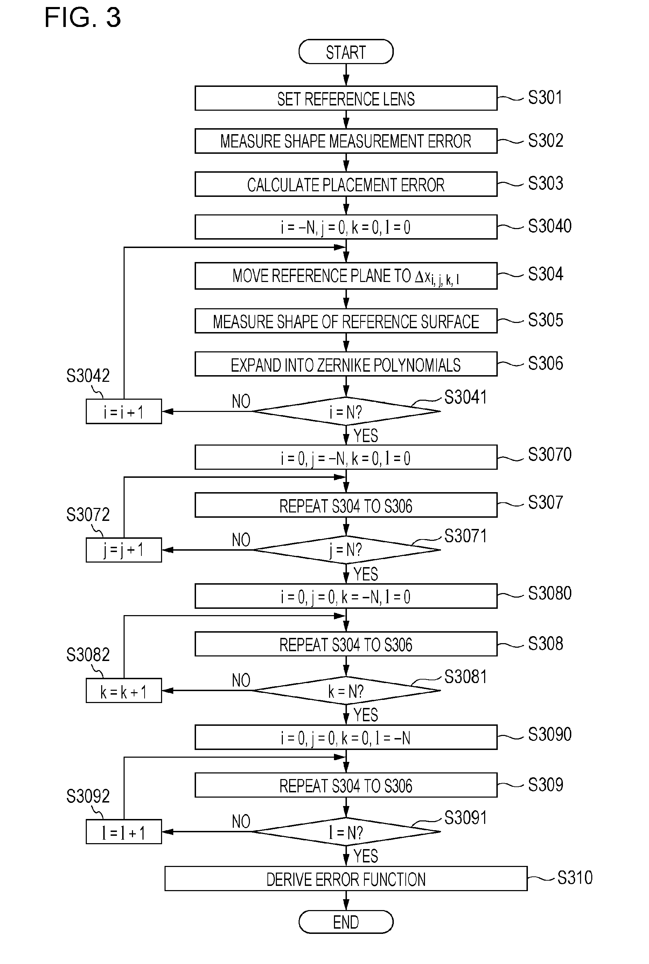

In this second embodiment, the configuration of measurement apparatus 100 is similar to that according to the first embodiment illustrated in Fig. 1A. Fig. 3 illustrates a measurement control procedure to determine the error function according to the present embodiment. As in the previous embodiment, the measurement control procedure may be described as a control program executed by, for example, the CPU 501 and may be stored in the ROM 502 (or another not-illustrated storage apparatus such as a HDD).

The Fig. 3 illustrates a process corresponding to part S221 illustrated in Fig. 2 in which the reference lens 11 is moved sequentially to a plurality of positions and the shape measurement is performed at each position and the error function $\Delta z_{err}$ is determined. The process of measuring the measurement target lens 12 and the process of correcting the shape data error may be performed in a similar manner to the first embodiment as illustrated in part S222 and part S223 in Fig. 2.

In step S301 in Fig. 3, the reference lens 11 is set on the stage 7 of the shape measurement apparatus 100 without performing precise alignment. It is sufficient if the alignment error is less than about 400 $\mu$m in position and less than about 0.2° in angle, which may be achieved using, for example, an abutting alignment fixture or the like. Placement errors that occur in the x, y, $\theta_x$, and $\theta_y$ directions respectively in this situation are herein denoted by $\Delta x_0$, $\Delta y_0$, $\Delta\theta_{x,0}$, and $\Delta\theta_{y,0}$ (see Fig. 1B).

In step S302, shape measurement error data $\Delta z_{err}$(x, y, $\Delta x_0$, $\Delta y_0$, $\Delta\theta_{x,0}$, $\Delta\theta_{y,0}$) of the shape measurement apparatus 100 is determined. More specifically, first, a light ray angle distribution is detected as to the light reflected from the reference surface and then incident on the detection unit 9. Next, in a similar manner to the first embodiment, the shape data z'$_b$(x, y, $\Delta x_0$, $\Delta y_0$, $\Delta\theta_{x,0}$, $\Delta\theta_{y,0}$) of the reference surface 11a is calculated. Thereafter, $z_b$(x, y) is subtracted from the shape data z'$_b$(x, y, $\Delta x_0$, $\Delta y_0$, $\Delta\theta_{x,0}$, $\Delta\theta_{y,0}$) of the reference surface 11a thereby obtaining the shape measurement error data $\Delta z_{err}$(x, y, $\Delta x_0$, $\Delta y_0$, $\Delta\theta_{x,0}$, $\Delta\theta_{y,0}$).

In step S303, as for the values of the placement components included in z'$_b$(x, y, $\Delta x_0$, $\Delta y_0$, $\Delta\theta_{x,0}$, $\Delta\theta_{y,0}$), $c_{n,b}$ are determined such that the evaluation function $\Delta_b$ defined by the following equation (16) is minimized.

$$\Delta_b = \iint \left( z'_b(x,y,\Delta x_0,\Delta y_0,\Delta\theta_{x,0},\Delta\theta_{y,0}) - \sum_{n=2,3,7,8} c_{n,b} Z_n(x/R,y/R) \right)^2 dxdy$$

$$(16)$$

Thereafter, $c_n = c_{n,b}$ are substituted into equation (5) thereby determining the placement errors $\Delta x_0$, $\Delta y_0$, $\Delta\theta_{x,0}$, and $\Delta\theta_{y,0}$.

Steps S304 to S309 are performed in a similar manner to steps S203 to S208 in Fig. 2. Note that also in Fig. 3, the process is described in a similar form to that in Fig. 2. In steps S304 to S306, the reference lens 11 is moved while changing parameter i (S304), the shape measurement is performed at each placement position (S305), and expansion into a Zernike polynomial is performed (S306). In step S3040 before step S304, parameters j, k, and 1 are fixed to 0 and parameter i is initialized to -N. In steps S3041 and S3042, following step S306, a determination is performed as to whether parameter i is to be incremented or not in the range from -N to N (step S3041) and if it is determined affirmatively, parameter i is incremented (step S3042).

In each of following steps S307, S308, and S309, the process in steps S304 to S306 described above is performed repeatedly while changing one of parameters j, k, 1 from -N to N (as to j in step S307, as to k in step S308, and as to 1 in step S309) while fixing the other parameters to 0. In the iterative process, one of parameters j, k, and 1 are initialized to -N and the other parameters are fixed to 0 in initialization steps S3070, S3080, and S3090 (as to j in step S3070, as to k in step S3080, and as to 1 in step S3090). In steps S3071 and S3072, steps S3081 and S3082, and steps S3091 and S3092, a determination is performed as to whether parameters j, k, and 1 are to be incremented in the middle of the iteration in which the parameters are changed from -N to N, and if it is affirmatively determined, parameters are incremented (as to j in steps S3017 and S3072, as to k in steps S3081 and S3082, and as to 1 in steps S3091 and S3092).

However, unlike the first embodiment in which the movement vector $\Delta x_{i,j,k,l}$ indicates a moving distance from the aligned state, the movement vector $\Delta x_{i,j,k,l}$ according to the present embodiment indicates a moving distance from the placement state in step S301, that is, from the state in which the placement errors are $\Delta x_0$, $\Delta y_0$, $\Delta\theta_{x,0}$, and $\Delta\theta_{y,0}$. In step S304, the reference lens 11 is moved to a movement destination indicated by the movement vector $\Delta x_{i,j,k,l}$. Note that use of the abutting alignment mechanism or the like allows it to achieve suppressed placement errors $\Delta x_0$, $\Delta y_0$, $\Delta\theta_{x,0}$, and $\Delta\theta_{y,0}$ although they are not zeros, and thus the reference surface placed at $\Delta x_{0,0,0,0}$ is located close to the position (measurement position) at which the reference surface is located when being precisely aligned. In the present embodiment, moving of the reference surface according to the movement vector $\Delta x_{i,j,k,l}$ causes the reference surface to relatively move within a range close to $\Delta x_{0,0,0,0}$, that is, the reference surface relatively moves within a range close to the measurement position.

In step S310, the error function $\Delta z_{err}(x, y, c_2, c_3, c_7, c_8)$ representing the relationship between the placement component and the shape measurement error is determined. In the present embodiment, $\Delta z_{err}(x, y, \Delta x, \Delta y, \Delta\theta_x, \Delta\theta_y)$ is expanded using $\Delta z_{err}(x, y, \Delta x_0, \Delta y_0, \Delta\theta_{x,0}, \Delta\theta_{y,0})$ as follows.

$$\Delta z_{err}(x,y,\Delta x,\Delta y,\Delta\theta_x,\Delta\theta_y) = \Delta z_{err}(x,y,\Delta x_0,\Delta y_0,\Delta\theta_{x,0},\Delta\theta_{y,0})$$
$$+ \Delta z'_{sys}(x,y,\Delta x-\Delta x_0,\Delta y-\Delta y_0,\Delta\theta_x-\Delta\theta_{x,0},\Delta\theta_y-\Delta\theta_{y,0})$$
$$+ \Delta z_{set}(x,y,\Delta x-\Delta x_0,\Delta y-\Delta y_0,\Delta\theta_x-\Delta\theta_{x,0},\Delta\theta_y-\Delta\theta_{y,0})$$

$$(17)$$

$\Delta z'_{sys}$ in equation (17) is given by replacing $\Delta x$, $\Delta y$, $\Delta\theta_x$, and $\Delta\theta_y$ in equations (9), (10), and (13) with Ax - $\Delta x_0$, $\Delta y$-$\Delta y_0$, $\Delta\theta_x$ - $\Delta\theta_{x,0}$, and $\Delta\theta_y$ - $\Delta\theta_{y,0}$, respectively, wherein value of $\Delta x_0$, $\Delta y_0$, $\Delta\theta_{x,0}$, and $\Delta\theta_{y,0}$ in equations (9), (10), and (13) are given by those determined in step S303. That is, variables are replaced such that $\Delta x \to \Delta x - \Delta x_0$, $\Delta y \to \Delta y - \Delta y_0$, $\Delta\theta_x \to \Delta\theta_x - \Delta\theta_{x,0}$, and $\Delta\theta_y \to \Delta\theta_y - \Delta\theta_{y,0}$, and then $\Delta z'_{sys}$ is determined in a similar manner to the first embodiment. Thus, the error function $\Delta z_{err}(x, y, \Delta x, \Delta y, \Delta\theta_x, \Delta\theta_y)$ is determined and further $\Delta z_{err}(x, y, c_2, c_3, c_7, c_8)$ is determined using equation (5).

Subsequently, the measurement of the measurement target lens 12 and the error correction on the shape data are performed according to the procedure illustrated in parts S222 and S223 of the first embodiment described above with reference to Fig. 2.

In the measurement procedure according to the present embodiment, it is not necessary to perform the alignment of the reference lens 11, and thus it is possible to further reduce the time spent to acquire the error function compared to the measurement procedure according to the first embodiment.

Third Embodiment

In the first embodiment and the second embodiment described above, it is assumed by way of example that the placement errors of the measurement target lens 12 are about 300 to 400 $\mu$m in $\Delta x$ and $\Delta y$ and about 0.1 to 0.2° in $\Delta\theta_x$ and $\Delta\theta_y$. However, in a case where the measurement target lens 12 with a small eccentricity is placed on the stage 7 using a high-precision fixture, there is a possibility that it is possible to achieve as small placement errors as about 30 $\mu$m for $\Delta x$ and $\Delta y$ and about 0.01° for $\Delta\theta x$ and $\Delta\theta y$ without performing alignment while monitoring the wavefront of reflected light using the detection unit 9. In such a case, it is possible to reduce the change, caused by the placement error, in an optical path of reflected light from the measurement target surface 12a, which may allow it for the aberration of the imaging optical system (the image forming lens 14) to change approximately linearly with the placement error.

The present embodiment discloses a shape measurement method applicable to such a case in which it is allowed to put or position the measurement target lens 12 with high accuracy. In this third embodiment, the configuration of measurement apparatus 100 is similar to that according to the first embodiment illustrated in Fig. 1A.

In the present embodiment, the process of determining the error function is performed in a similar manner to steps S301 to S310 according to the second embodiment (Fig. 3) and the process of measuring the measurement target surface is then performed in a similar manner to steps S210 to S214 (Fig. 2).

However, in the present embodiment, the derivation of the error function in step S310 is performed in a different manner from that according to the second embodiment. That is, in the second embodiment described above, the coefficient $c_n$ is approximated by a second-order power function of the placement error as in equation (10). On the other hand, in the present embodiment, $b_{x,n,2}$, $b_{y,n,2}$, $b_{\theta x,n,2}$, and $b_{\theta y,n,2}$ are set to 0, that is, the coefficient $c_n$ is approximated by a first-order power function. Furthermore, in the state in which $b_{x,n,2}$, $b_{y,n,2}$, $b_{\theta x,n,2}$, and $b_{\theta y,n,2}$ are set to 0, $b_{x,n,1}$, $b_{y,n,1}$, $b_{\theta x,n,1}$, and $b_{\theta y,n,1}$ are determined such that the respective evaluation functions are minimized.

In the present embodiment, when it is allowed to mount or position the measurement target lens 12 with as high accuracy as described above, use of the calculation method described above makes it possible to easily determine the error function $\Delta z_{err}$ at lower calculation cost. Furthermore, the number of parameters determined according to equation (13) becomes one half, and thus it is possible to determine $b_{x,n,1}$, $b_{y,n,1}$, $b_{\theta x,n,1}$, and $b_{\theta y,n,1}$ with relatively high accuracy using a small number of pieces of data (a small range in which i, j, k, and 1 are incremented). More specifically, for example, it is allowed to reduce the value of N. In the first embodiment described above, i, j, k, and 1 are incremented in a range from -N to N. In the present embodiment, i, j, k, and 1 may be incremented in a smaller range, for example, from 0 to N. This allows a further reduction in time spent to acquire the error function.

Fourth Embodiment

In a fourth embodiment described below, it is also assumed as with the third embodiment that it is possible to reduce the placement errors of the measurement target lens 12 to as small values as about 30 $\mu$m for $\Delta x$ and $\Delta y$ and about 0.01° for $\Delta\theta_x$ and $\Delta\theta_y$ and the aberration of the imaging optical system changes approximately linearly with the placement error.

In this case, the error function $\Delta z_{err}(x, y, \Delta x, \Delta y, \Delta\theta_x, \Delta\theta_y)$ can be represented as follows.

$$\begin{aligned}
\Delta z_{err}(x, y, \Delta x, \Delta y, \Delta\theta_x, \Delta\theta_y) &= \Delta z_{err}(x, y, \Delta x_0, \Delta y_0, \Delta\theta_{x,0}, \Delta\theta_{y,0}) \\
&+ d_x(x, y)(\Delta x - \Delta x_0) + d_y(x, y)(\Delta y - \Delta y_0) \\
&+ d_{\theta x}(x, y)(\Delta\theta_x - \Delta\theta_{x,0}) + d_{\theta y}(x, y)(\Delta\theta_y - \Delta\theta_{y,0})
\end{aligned} \tag{18}$$

The present embodiment discloses a simple shape measurement method using equation (18) described above. In this fourth embodiment, it is assumed that the configuration of measurement apparatus 100 is similar to that illustrated in Fig. 1A according to the previous embodiments.

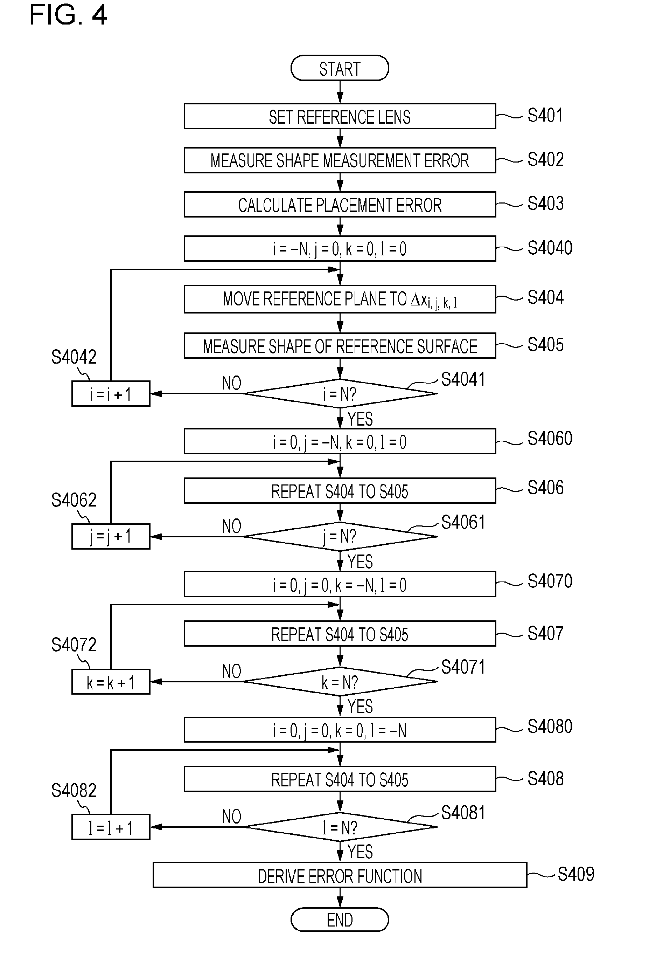

In the present embodiment, the error function is determined according to a procedure illustrated in a flow chart of Fig. 4, while the following processes associated with the measurement target surface measurement and the error correction are performed according to the procedure described in steps S210 to S214 in Fig. 2. Fig. 4 illustrates, in a similar form to that of Fig. 3, a procedure of determining the error function $\Delta z_{err}(x, y, \Delta x, \Delta y, \Delta\theta_x, \Delta\theta_y)$. As with the previous embodiment, the measurement control procedure may be described as a control program executed by, for example, the CPU 501 and may be stored in the ROM 502 (or another not-illustrated storage apparatus such as a HDD).

Steps S401 to S403 in Fig. 4 are performed in a similar manner to steps S301 to S303 in Fig. 3 (according to the second embodiment). That is, in step S401, as in step S301, the reference lens 11 is set on the stage 7 of the shape measurement apparatus 100 without performing precise alignment. In step S402, as in step S302, shape measurement

error data $\Delta_{zerr}(x, y, \Delta x_0, \Delta y_0, \Delta\theta_{x,0}, \Delta\theta_{y,0})$ of the shape measurement apparatus 100 is determined. In step S403, as in step S303, placement errors $\Delta x_0$, $\Delta y_0$, $\Delta\theta_{x,0}$, and $\Delta\theta_{y,0}$ are determined.

Steps S404 to S408 are illustrated in a form similar to that in Fig. 3 or Fig. 2. In these steps, parameters of the movement vector $\Delta x_{i,j,k,l}$ described above are incremented by one at a time in the range from -N to N sequentially for each parameter i, j, k, or 1, and the reference lens 11 is moved to the movement destination indicated by the movement vector and the shape of the reference surface 11a is measured at each movement destination.

In steps S404 and S405, the reference lens 11 is moved while changing parameter i (S404), and the shape measurement is performed at each placement position (S405). However, in the present embodiment, the Zernike expansion in Fig. 2 or Fig. 3 is not performed. In step S4040 before step S404, parameters j, k, and 1 are fixed to 0 and parameter i is initialized to -N. In steps S4041 and S4042, following step S405, a determination is performed as to whether parameter i is to be incremented or not in the range from -N to N (step S4041) and if it is determined affirmatively, parameter i is incremented (step S4042).

In each of following steps S406, S407, and S408, the process in steps S404 and S405 described above is performed repeatedly while changing one of parameters j, k, 1 from -N to N (as to j in step S406, as to k in step S407, and as to 1 in step S408) while fixing the other parameters to 0. In the iteration described above, one of parameters j, k, and 1 are initialized to -N and the other parameters are fixed to 0 in initialization steps S4060, S4070, and S4080 (as to j in step S4060, as to k in step S4070, and as to 1 in step S4080). In steps S4061 and S4062, steps S4071 and S4072, and steps S4081 and S4082, a determination is performed as to whether parameters j, k, and 1 are to be incremented in the middle of the iteration in which the parameters are changed from -N to N, and if it is affirmatively determined, parameters are incremented (as to j in steps S4061 and S4062, as to k in steps S4071 and S4072, and as to 1 in steps S4081 and S4082).

By performing steps S404 and S405 in each of the four iteration loops described above, a plurality of pieces of shape data $\Delta z'_b(x, y, \Delta x_i, \Delta y_j, \Delta\theta_{x,k}, \Delta\theta_{y,l})$ of the reference surface 11a are acquired at each placement position.

In step S409, the error function is derived. In the present embodiment, the error function is represented by equation (18) described above. The shape measurement error data $\Delta z_{err}(x, y, \Delta x_0, \Delta y_0, \Delta\theta_{x,0}, \Delta\theta_{y,0})$ in equation (18) has already been determined in step S402. Therefore, $d_x(x,y)$, $d_y(x,y)$, $d\theta_x(x,y)$, and $d\theta_y(x,y)$ are further determined. These coefficients correspond to proportionality coefficients of $\Delta z'_b$ in terms of $\Delta x_i$, $\Delta y_j$, $\Delta\theta_{x,k}$, and $\Delta\theta_{y,l}$, and thus it is possible to determine these coefficients according to equation (19) given below.

$$d_x(x,y) = \frac{(2N+1)\sum_{i=-N}^{N}\Delta x_i \Delta z'_b(x,y,\Delta x_i,0,0,0) - \sum_{i=-N}^{N}\Delta x_i \sum_{i=-N}^{N}\Delta z'_b(x,y,\Delta x_i,0,0,0)}{(2N+1)\sum_{i=-N}^{N}\Delta x_i^2 - \left(\sum_{i=-N}^{N}\Delta x_i\right)^2}$$

$$d_y(x,y) = \frac{(2N+1)\sum_{j=-N}^{N}\Delta y_j \Delta z'_b(x,y,0,\Delta y_j,0,0) - \sum_{j=-N}^{N}\Delta y_j \sum_{j=-N}^{N}\Delta z'_b(x,y,0,\Delta y_j,0,0)}{(2N+1)\sum_{j=-N}^{N}\Delta y_j^2 - \left(\sum_{j=-N}^{N}\Delta y_j\right)^2}$$

$$d_{\theta x}(x,y) = \frac{(2N+1)\sum_{k=-N}^{N}\Delta\theta_{x,k} \Delta z'_b(x,y,0,0,\Delta\theta_{x,k},0) - \sum_{k=-N}^{N}\Delta\theta_{x,k} \sum_{k=-N}^{N}\Delta z'_b(x,y,0,0,\Delta\theta_{x,k},0)}{(2N+1)\sum_{k=-N}^{N}\Delta\theta_{x,k}^2 - \left(\sum_{i=-N}^{N}\Delta\theta_{x,k}\right)^2}$$

$$d_{\theta y}(x,y) = \frac{(2N+1)\sum_{l=-N}^{N}\Delta\theta_{y,l} \Delta z'_b(x,y,0,0,0,\Delta\theta_{y,l}) - \sum_{l=-N}^{N}\Delta\theta_{y,l} \sum_{l=-N}^{N}\Delta z'_b(x,y,0,0,0,\Delta\theta_{y,l})}{(2N+1)\sum_{l=-N}^{N}\Delta\theta_{y,l}^2 - \left(\sum_{l=-N}^{N}\Delta\theta_{y,l}\right)^2}$$

$$(19)$$

Note that $\Delta z_{err}(x, y, \Delta x_0, \Delta y_0, \Delta\theta_{x,0}, \Delta\theta_{y,0})$ may be determined as follows.

$$\Delta z_{err}(x, y, \Delta x_0, \Delta y_0, \Delta \theta_{x,0}, \Delta \theta_{y,0}) = \frac{1}{2N+1}\left[\sum_{i=-N}^{N}\Delta z'_b(x, y, \Delta x_i, 0, 0, 0) - d_x(x, y)\sum_{i=-N}^{N}\Delta x_i\right]$$

$$(20)$$

After the error function $\Delta z_{err}(x, y, \Delta x, \Delta y, \Delta \theta_x, \Delta \theta_y)$ is determined, the measurement target surface measurement and the error correction are performed according to steps S210 to S214 (according to the first embodiment) as illustrated in Fig. 2.

In the calculation procedure according to the present embodiment, as described above, it is not necessary to expand $\Delta z'_b(x_p, y_q, \Delta x_i, \Delta y_j, \Delta \theta_{x,k}, \Delta \theta_{y,l})$ into a Zernike function, and thus it is possible to determine the error function $\Delta z_{err}(x, y, \Delta x, \Delta y, \Delta \theta_x, \Delta \theta_y)$ in a further simpler manner at lower cost.

Fifth Embodiment

In the first to fourth embodiments described above, the shape data of the measurement target surface 12a is corrected using the error function $\Delta z_{err}(x, y, \Delta x, \Delta y, \Delta \theta_x, \Delta \theta_y)$. In a fifth embodiment described below, the shape data of the measurement target surface 12a is corrected without generating the error function.

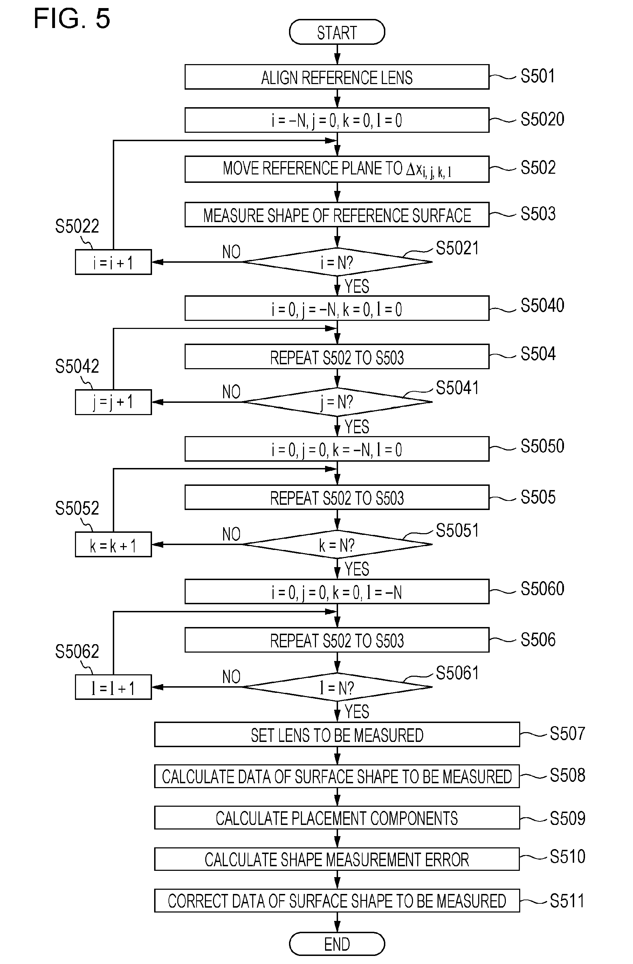

Fig. 5 illustrates, in a form similar to that of Fig. 2, a process of generating error data (steps S501 to S506), a process of measuring a measurement target surface (steps S507 and S508), and an error correction process (steps S509 to 511). As with the previous embodiment, the measurement control procedure may be described as a control program executed by, for example, the CPU 501 and may be stored in the ROM 502 (or another not-illustrated storage apparatus such as a HDD).

In step S501 in Fig. 5, as in step S201 in Fig. 2, the reference lens 11 is placed on the stage and aligned at the measurement position (the initial position) described above.

Following steps S502 to S508 are illustrated in a similar form to that in Fig. 3 or Fig. 2. In these steps, parameters of the movement vector $\Delta x_{i,j,k,l}$ described above are incremented by one at a time in the range from -N to N sequentially for each parameter i, j, k, or 1, and the reference lens 11 is moved to the movement destination indicated by the movement vector and the shape of the reference surface 11a is measured at each movement destination.

In steps S502 and S503, as in steps S203 and S204 in Fig. 2, the reference lens 11 is moved the shape data $z'_b$ of the reference surface 11a is acquired. In step S5020 before step S502, parameters j, k, and 1 are fixed to 0 and parameter i is initialized to -N. In steps S5021 and S5022, following step S503, a determination is performed as to whether parameter i is to be incremented or not in the range from -N to N (step S5021) and if it is determined affirmatively, parameter i is incremented (step S5022).

In each of following steps S504, S505, and S506, the process in steps S502 and S503 described above is performed repeatedly while changing one of parameters j, k, 1 from -N to N (as to j in step S504, as to k in step S505, and as to 1 in step S506) while fixing the other parameters to 0. In the iteration described above, one of parameters j, k, and 1 are initialized to -N and the other parameters are fixed to 0 in initialization steps S5040, S5050, and S5060 (as to j in step S5040, as to k in step S5050, and as to 1 in step S5060). In steps S5041 and S5042, steps S5051 and S5052, and steps S5061 and S5062, a determination is performed as to whether parameters j, k, and 1 are to be incremented in the middle of the iteration in which the parameters are changed from -N to N, and if it is affirmatively determined, parameters are incremented (as to j in steps S5041 and S5042, as to k in steps S5051 and S5052, and as to 1 in steps S5061 and S5062).

After the reference lens 11 is moved according to the movement vector $\Delta x_{i,j,k,l}$ and the shape data $z'_b$ of the reference surface 11a is acquired at each placement position as described above, the measurement of the measurement target lens 12 is performed. That is, in steps S507 and S508, as in step S210 and S211, the measurement target lens 12 is placed and the temporary shape data $z'_s(x, y)$ of the measurement target surface 12a is acquired.

Thereafter, in steps S509 to S511, the shape data of the measurement target surface 12a acquired in step S508 is corrected as follows.

In step S509, the placement error of the measurement target surface 12a is determined. More specifically, $c_{n,s}$ is calculated such that the evaluation function $\Delta_s$ given by equation (14) is minimized. Thereafter, the calculated $c_{n,s}$ are substituted as $c_n = c_{n,s}$ into equation (5) thereby calculating $\Delta x_s$, $\Delta y_s$, $\Delta \theta_{x,s}$, and $\Delta \theta_{y,s}$.

In step S510, a shape measurement error $\Delta z_{err}(x, y)$ included in the measurement target surface shape data is calculated. More specifically, the placement errors $\Delta x_s$, $\Delta y_s$, $\Delta \theta_{x,s}$, and $\Delta \theta_{y,s}$ of the measurement target surface acquired in step S509 and the reference surface shape data $z'_b$ acquired in steps S503 to S506 are substituted into a linear interpolation equation given below thereby determining $\Delta z_{err}(x, y)$.

$$\Delta z_{err}(x,y) = \frac{(\Delta x_{i'+1} - \Delta x_s)z'_b(x,y,\Delta x_{i'},0,0,0) + (\Delta x_s - \Delta x_{i'})z'_b(x,y,\Delta x_{i'+1},0,0,0)}{\Delta x_{i'+1} - \Delta x_{i'}}$$

$$+ \frac{(\Delta y_{j'+1} - \Delta y_s)z'_b(x,y,0,\Delta y_{j'},0,0) + (\Delta y_s - \Delta y_{j'})z'_b(x,y,0,\Delta y_{j'+1},0,0)}{\Delta y_{j'+1} - \Delta y_{j'}}$$

$$+ \frac{(\Delta \theta_{x,k'+1} - \Delta \theta_{x,s})z'_b(x,y,0,0,\Delta \theta_{x,k'},0) + (\Delta \theta_{x,s} - \Delta \theta_{x,k'})z'_b(x,y,0,0,\Delta \theta_{x,k'+1},0)}{\Delta \theta_{x,k'+1} - \Delta \theta_{x,k'}} \cdots$$

$$+ \frac{(\Delta \theta_{y,l'+1} - \Delta \theta_{y,s})z'_b(x,y,0,0,0,\Delta \theta_{y,l'}) + (\Delta \theta_{y,s} - \Delta \theta_{y,l'})z'_b(x,y,0,0,0,\Delta \theta_{y,l'+1})}{\Delta \theta_{y,l'+1} - \Delta \theta_{y,l'}}$$

$$- 4z_b$$

(21)

In equation (21) described above, i', j', k', and 1' are integers respectively satisfying the following conditions:

$$\Delta x_{i'} \leq \Delta x_s < \Delta x_{i'+1}$$

$$\Delta y_{j'} \leq \Delta y_s < \Delta x_{j'+1}$$

$$\Delta \theta_{x,k'} \leq \Delta \theta_{x,s} < \Delta \theta_{x,k'+1}$$

$$\Delta \theta_{y,1'} \leq \Delta \theta_{y,s} < \Delta \theta_{y,1'+1}$$

Note that $z'_b$ includes both errors, that is, the placement component $\Delta z_{set}$ and $\Delta z_{sys}$, and thus $\Delta z_{err}$ calculated in equation (21) also includes both errors.

In step S511, shape data $z_s(x,y)$ of the measurement target surface 12a corrected according to equation (6) is calculated using the temporary shape data $z'_s(x,y)$ acquired in step S508 and the shape measurement error $\Delta z_{err}(x,y)$ calculated according to equation (21) described above. That is, in the present embodiment, the shape measurement error $\Delta z_{err}(x,y)$ is determined by the linear interpolation without performing the calculation of the error function and the Zernike expansion. This shape measurement error $\Delta z_{err}(x,y)$ may be used instead of the term in the error function $\Delta z_{err}(x,y,c_2,c_3,c_7,c_8)$ in equation (6).

Thus, by removing the error data from the temporary shape data $z'_s(x,y)$ acquired in step S508, it is possible to obtain the shape data $z_s(x,y)$ of the measurement target surface 12a.

In the present embodiment, as described above, the shape measurement error $\Delta z_{err}(x,y)$ is determined by linear interpolation without performing the calculation of the error function and the Zernike expansion. That is, in the present embodiment, the process is not performed to approximate the components of the shape measurement error by a linear function or a quadratic function. Therefore, even in a case where the measurement target surface 12a has so greater a placement error that the components of the shape measurement error cannot be approximated by a quadratic function of a placement component, it is possible to accurately correct the shape measurement error of the measurement target surface at low calculation cost.

Although in the present embodiment described above, it is assumed by way of example that linear interpolation is used in equation (21), the shape measurement error $\Delta z_{err}(x,y)$ may be calculated using another method such as spline interpolation or the like.

Sixth Embodiment

In the first to fourth embodiments described above, it is assumed that changes in shape of the measurement target surface caused by a shift in the coordinate system defined in the x, y, $\theta_x$, and $\theta_y$ directions are proportional to Zernike functions $Z_2$, $Z_3$, $Z_7$, and $Z_8$, and these components are defined by placement components $\Delta z_{set}$. The placement

components are then calculated according to equations (4), (7), and (14), the temporary shape data of the measurement target surface is corrected. The method described above is based on the fact that equation (4) represents the change of the design shape when the coordinate system is shifted and the assumption that same change in shape of the measurement target surface occurs when the definition of the coordinate system is shifted by the placement error. On the other hand, in the fifth embodiment described above, $\Delta z_{err}$ including the placement component $\Delta z_{set}$ is calculated by substituting the shape measurement data $z'_b$ of the reference surface into equation (21), and the temporary shape data of the measurement target surface is corrected. In this method, it is assumed that a change in shape caused by a shift in definition of the coordinate system is the same for both the measurement target surface and the reference surface. However, for example, in a case where the shape measurement is performed on the measurement target lens 12 in the middle of production, there is a possibility that the result includes a shape error with a high spatial frequency that does not occur in the design shape or the reference surface. When it is tried to measure the shape of a lens including such placement errors, there is a possibility that a large shape measurement error occurs due to a shift of placement components. Although this error is caused by a shift in definition of the coordinate system, there is a possibility that it is difficult to suppress the error by the correction based on the design shape according to one of the first to fourth embodiment, or by the correction based on the shape data of the reference surface according to the fifth embodiment. In view of the above, a sixth embodiment described below discloses a technique of accurately measuring the shape even in a case where the measurement target surface 12a includes a shape error with a high spatial frequency.

In the present embodiment, the shape data $z'_s(x',y')$ of the measurement target surface in a similar manner to the first embodiment, for example, according to the flow chart illustrated in Fig. 2 except that the method of deriving the error function in step S209, the method of calculating the shape measurement error in step S213, and the method of the correction in step S214 are modified as follows.

In step S209, $\Delta z_{sys}(x, y, c_2, c_3, c_7, c_8)$ is derived as the error function.

In step S213, the values of the placement components $c_{n,s}$ ($n = 2, 3, 7, 8$) determined in step S212 are substituted as $c_n = c_{n,s}$ into the error function derived in step S209 thereby determining $\Delta z_{sys}$.

In step S214, the placement errors $\Delta x_s$, $\Delta y_s$, $\Delta\theta_{x,s}$, and $\Delta\theta_{y,s}$ are calculated according to equation (5) from the values of the placement components extracted from the measurement target surface in step S212. Thereafter, the shape data $z'_s(x', y')$ of the measurement target surface acquired in step S212 is substituted into an equation given below thereby acquiring shape data $z_s(x, y)$ with reduced errors.

$$
\begin{pmatrix} x \\ y \\ z_s(x,y) \end{pmatrix} = \begin{pmatrix} 1 & 0 & 0 \\ 0 & \cos\Delta\theta_{x,s} & \sin\Delta\theta_{x,s} \\ 0 & -\sin\Delta\theta_{x,s} & \cos\Delta\theta_{x,s} \end{pmatrix} \begin{pmatrix} \cos\Delta\theta_{y,s} & 0 & -\sin\Delta\theta_{y,s} \\ 0 & 1 & 0 \\ \sin\Delta\theta_{y,s} & 0 & \cos\Delta\theta_{y,s} \end{pmatrix} \begin{pmatrix} x'-\Delta x_s \\ y'-\Delta y_s \\ z'_s(x',y') \end{pmatrix} - \begin{pmatrix} 0 \\ 0 \\ \Delta z_{sys}(x,y) \end{pmatrix}
$$

$$(22)$$

In the above calculation, unlike the previous embodiments in which the measurement error caused by the shift in the definition of the coordinate system is removed as the placement component thereby making the correction, a correction is made by performing a coordinate transformation on $z'_s(x', y')$ based on the placement errors $\Delta x_s$, $\Delta y_s$, $\Delta\theta_{x,s}$, and $\Delta\theta_{y,s}$. In this way, it is possible to obtain shape data $z_s(x, y)$ corrected in terms of the shape measurement error caused by the placement error.

In the present embodiment, as described above, the placement error data is calculated according to equation (5) from the values of the placement components extracted from the measurement target surface, and the temporary shape data is corrected based on the placement error data thereby obtaining the shape data $z_s(x, y)$. By performing the coordinate transformation in the above-described manner, it is possible to reduce the shape measurement error of the measurement target surface 12a caused by the shift of the shape error with a high spatial frequency. Thus, the present embodiment makes it possible to perform the shape measurement with high accuracy even when there is a shift of the shape error with a high spatial frequency as in a case, for example, where the measurement target lens 12 is measured in the middle of the production.

The shape measurement methods disclosed in the embodiments described above are useful to measure or evaluate the shape of the optical element such as the measurement target lens 12 described above. For example, the shape measurement methods are used to measure or evaluate the shape of an optical element in the middle of or at the end of a forming process such as molding, bonding, polishing or the like. The result of the measurement or the evaluation of the shape of the optical element may be transmitted to a production management server PC or the like via an interface such as a communication unit 504 illustrated in Fig. 1A. The result of the measurement or the evaluation of the shape of the measurement target surface 12a may be transmitted to another apparatus such as a processing apparatus that re-polishes the measurement target lens 12 to control the re-processing of the measurement target lens 12. The shape measurement methods disclosed in the embodiments described above may be advantageously used to measure or evaluate the shape of an optical element formed in an optical element production process.

The measurement control operation according to any one of the embodiments may be realized by supplying, to the processing unit 10, a storage medium storing a shape measurement program that realizes a measurement control operation according to one of the embodiments and by executing the shape measurement program such that a computer (a CPU or a MPU) in the processing unit 10 reads out the shape measurement program from the storage medium and executes it. In this case, the shape measurement program read from the storage medium realizes the functions disclosed in the embodiments described above, and thus the shape measurement program and the storage medium in which the shape measurement program is stored both fall within the scope of the present invention.

In the embodiments described above, it is assumed by way of example but not limitation that the ROM 502 is used as the computer-readable storage medium. The program according to the embodiment may be stored in any type of storage medium as long as the storage medium allows a computer to read the program from the storage medium. The storage medium for storing the program may be an external storage apparatus (not illustrated) other than the ROM 502 illustrated in Fig. 1A. Storage media which may be employed herein include a floppy disk, a hard disk, various types of optical disks, a magneto-optical disk, a magnetic tape, a rewritable non-volatile memory (such as a USB memory), a ROM, and the like. Alternatively, the program according to the embodiment may be downloaded via a network and may be executed by the CPU 501.

A part or all of functions according to the embodiments described above may be realized not only by executing the program code on a computer, but part or all of the process may be performed by an operating system or the like running on the computer in accordance with the program code thereby realizing part or all of functions according to the embodiments described above. Such implementation of the functions also falls within the scope of the present invention.

To implement one or more functions according to any of the above-described embodiments of the invention, the program stored on a storage medium may be loaded into a memory of an extension card inserted in a computer or into a memory of an extension unit connected to the computer, and part or all of the functions according to the embodiments may be performed by a CPU or the like disposed on the extension card or the extension unit in accordance with the loaded program code. Note that such implementation of the functions also falls within the scope of the present invention.

In the embodiments described above, it is assumed by way of example but not limitation that the computer executes the program stored in the storage medium such as the HDD or the like thereby realizing part or all functions described above. For example, part or all of functions realized by a control unit that operates based on the program may be realized using a dedicated large scale integration (LSI) such as an application specific integrated circuit (ASIC), a field programmable gate array (FPGA), or the like.

In the embodiments described above, a reference surface is moved, relatively with respect to an optical system, to a plurality of placement positions in the vicinity of a predetermined measurement position, and shape data of the reference surface is calculated. Thereafter, error data is determined based on a relationship between the plurality of placement positions and the plurality of pieces of shape data of the reference surface determined at the respective placement positions, and the shape data of the measurement target surface obtained via the wavefront measurement is corrected using the error data thereby obtaining the corrected shape data of the measurement target surface. Thus it is possible to reduce the shape measurement error caused by the aberration of the image forming lens varying depending on the position of the measurement target surface, and it is possible to measure the shape of the measurement target surface with high accuracy without performing the alignment of the measurement target surface or regardless of the alignment accuracy of the measurement target surface.

While the present invention has been described with reference to embodiments, it is to be understood that the invention is not limited to the disclosed embodiments.

**Claims**

1. A shape measurement method of measuring a shape of a measurement target surface (12a) by using a wavefront sensor (9) configured to detect a wavefront of reflected light from the measurement target surface (12a) via an optical system (14) and a control apparatus (10) configured to calculate shape data of the measurement target surface (12a) from an output from the wavefront sensor (9), comprising performing, with the control apparatus (10):

   a first wavefront measurement process comprising moving a reference surface (11a) relatively with respect to the optical system (14) to a plurality of placement positions sequentially in the vicinity of a measurement position and measuring a wavefront of reflected light from the reference surface (11a) via the optical system (14) using the wavefront sensor (9) at each placement position;
   a reference surface calculation process comprising calculating a plurality of pieces of shape data of the reference surface (11a) based on the wavefronts measured at the respective placement positions in the first wavefront measurement process and based on information on the optical system (14);

a second wavefront measurement process comprising measuring the wavefront of reflected light from the measurement target surface (12a) via the optical system (14) using the wavefront sensor (9);

a temporary shape data calculation process comprising calculating temporary shape data of the measurement target surface (12a) based on the wavefront of the reflected light from the measurement target surface (12a) measured in the second wavefront measurement process and based on information on the optical system (14);

a placement component calculation process comprising calculating a placement component corresponding to a shape change that occurs when a design shape of the measurement target surface (12a) is relatively moved from the wavefront of the reflected light from the measurement target surface (12a) measured in the second wavefront measurement process or from the temporary shape data;

an error calculation process comprising calculating error data included in the temporary shape data calculated in the temporary shape data calculation process based on a relationship between the plurality of placement positions to which the reference surface (11a) is relatively moved in the first wavefront measurement process and the plurality of pieces of shape data of the reference surface (11a) calculated in the reference surface calculation process and based on the placement component; and

a correction process comprising removing the error data calculated in the error calculation process from the temporary shape data thereby calculating shape data of the measurement target surface (12a).

2. The shape measurement method according to claim 1, further comprising:

performing, with the control apparatus, a derivation process comprising deriving an error function indicating shape measurement errors at the plurality of placement positions based on a relationship between the plurality of placement positions to which the reference surface is relatively moved in the first wavefront measurement process and the plurality of pieces of shape data of the reference surface calculated in the reference surface calculation process,

wherein error calculation process comprises calculating the error data included in the temporary shape data calculated in the temporary shape data calculation process using the error function derived in the derivation process and the placement component calculated in the placement component calculation process.

3. The shape measurement method according to claim 2, wherein in the derivation process, the error function is derived by approximating the shape data at the plurality of placement positions by a first-order or second-order power function of the placement component values.

4. The shape measurement method according to one of claims 1 to 3, wherein the reference surface is produced based on a design shape of the measurement target surface.

5. The shape measurement method according to claim 1, wherein the error data is data acquired such that the difference is determined between the shape data calculated from the wavefront obtained at the measurement position by measuring, by the wavefront sensor, the light reflected from the reference surface via the optical system and the known shape data of the reference surface and then a change in the plurality of pieces of shape data of the reference surface calculated in the reference surface calculation process is added to the difference.

6. The shape measurement method according to one of claims 2 to 5, wherein the correction process includes removing the placement component calculated in the placement component calculation process from the temporary shape data calculated in the temporary shape data calculation process.

7. The shape measurement method according to one of claims 2 to 6, wherein
the design shape is represented by an axial symmetry function,
wherein the placement components calculated in the placement component calculation process are a tilt component and a coma aberration component.

8. The shape measurement method according to any one of claims 2 to 7, wherein in the error calculation process, the error data is calculated as a linear sum of Zernike functions.

9. The shape measurement method according to claim 1, wherein in the error calculation process, the error data is calculated by interpolating the plurality of pieces of temporary shape data calculated in the temporary shape data calculation process.

**10.** The shape measurement method according to any one of claims 1 to 9, wherein the shape data of the measurement target surface is calculated by performing, based on the placement component calculated in the placement component calculation process, a coordinate transformation on the temporary shape data calculated in the temporary shape data calculation process so as to remove the error data from the temporary shape data.

**11.** The shape measurement method according to any one of claims 1 to 10, wherein the wavefront sensor is a Shack-Hartmann sensor including a microlens array and a two-dimensional photosensor and configured to split and then condense a wavefront of incident light by the microlens array and detect the condensed light by the two-dimensional photosensor.

**12.** A program comprising executable instructions which upon execution cause a control apparatus (10) of a shape measurement apparatus to execute the shape measurement method according to any one of claims 1 to 11.

**13.** A computer-readable storage medium storing the shape measurement program according to claim 12.

**14.** A method of producing an optical element, comprising:

forming the optical element; and
evaluating the formed optical element by measuring a shape of the optical element having the measurement target surface by using the shape measurement method according to any one of claims 1 to 11.

**15.** An optical element produced using the method of producing the optical element according to claim 14.

**16.** A shape measurement apparatus (100) including a wavefront sensor (9) arranged to detect a wavefront of reflected light from a measurement target surface (12a) via an optical system (14) and a control apparatus (10) arranged to calculate shape data of the measurement target surface (12a) from an output from the wavefront sensor (9), wherein the control apparatus (10) is operable to:

move a reference surface (11a) relatively with respect to the optical system (14) to a plurality of placement positions sequentially in the vicinity of a measurement position;
measure, at each placement position and by using the wavefront sensor (9), a wavefront of reflected light from the reference surface (11a) via the optical system (14);
calculate a plurality of pieces of shape data of the reference surface (11a) based on the wavefronts measured at the respective placement positions by using the wavefront sensor (9) and based on information on the optical system (14);
measure, by using the wavefront sensor (9), the wavefront of the reflected light from the measurement target surface (12a) via the optical system;
calculate temporary shape data of the measurement target surface (12a) based on the wavefront, measured using the wavefront sensor (9), of the reflected light from the measurement target surface (12a) and based on the information on the optical system (14);
based on the wavefront of the reflected light from the measurement target surface (12a) or based on the temporary shape data, calculate a placement component corresponding to a shape change that occurs when a design shape of the measurement target surface (12a) is relatively moved;
calculate error data included in the temporary shape data based on a relationship between the plurality of placement positions to which the reference surface (11a) is relatively moved and the plurality of pieces of shape data of the reference surface (11a) calculated at the respective placement positions and based on the placement component; and
calculate shape data of the measurement target surface (12a) by removing the error data from the temporary shape data.

## FIG. 1A

## FIG. 1B

## FIG. 2

START

S221

ALIGN REFERENCE LENS — S201

MEASURE SHAPE MEASUREMENT ERROR — S202

$i = -N, j = 0, k = 0, l = 0$ — S2030

MOVE REFERENCE PLANE TO $\Delta x_{i, j, k, l}$ — S203

MEASURE SHAPE OF REFERENCE SURFACE — S204

EXPAND INTO ZERNIKE POLYNOMIALS — S205

$i = i + 1$ — S2032    NO    $i = N?$ — S2031    YES

$i = 0, j = -N, k = 0, l = 0$ — S2060

REPEAT S203 TO S205 — S206

$j = j + 1$ — S2062    NO    $j = N?$ — S2061    YES

$i = 0, j = 0, k = -N, l = 0$ — S2070

REPEAT S203 TO S205 — S207

$k = k + 1$ — S2072    NO    $k = N?$ — S2071    YES

$i = 0, j = 0, k = 0, l = -N$ — S2080

REPEAT S203 TO S205 — S208

$l = l + 1$ — S2082    NO    $l = N?$ — S2081    YES

DERIVE ERROR FUNCTION — S209

S222

SET LENS TO BE MEASURED — S210

CALCULATE DATA OF SURFACE SHAPE TO BE MEASURED — S211

S223

CALCULATE PLACEMENT COMPONENTS — S212

CALCULATE SHAPE MEASUREMENT ERROR — S213

CORRECT DATA OF SURFACE SHAPE TO BE MEASURED — S214

END

## FIG. 3

```
                    ( START )
                       │
                       ▼
      ┌──────────────────────────────────┐
      │       SET REFERENCE LENS          │──── S301
      └──────────────────────────────────┘
                       │
                       ▼
      ┌──────────────────────────────────┐
      │  MEASURE SHAPE MEASUREMENT ERROR  │──── S302
      └──────────────────────────────────┘
                       │
                       ▼
      ┌──────────────────────────────────┐
      │     CALCULATE PLACEMENT ERROR     │──── S303
      └──────────────────────────────────┘
                       │
                       ▼
      ┌──────────────────────────────────┐
      │   i = –N, j = 0, k = 0, l = 0     │──── S3040
      └──────────────────────────────────┘
                       │
                       ▼
      ┌──────────────────────────────────┐
      │  MOVE REFERENCE PLANE TO Δx_{i,j,k,l}  │──── S304
      └──────────────────────────────────┘
                       │
                       ▼
      ┌──────────────────────────────────┐
      │  MEASURE SHAPE OF REFERENCE SURFACE  │──── S305
      └──────────────────────────────────┘
                       │
                       ▼
      ┌──────────────────────────────────┐
      │   EXPAND INTO ZERNIKE POLYNOMIALS │──── S306
      └──────────────────────────────────┘
                       │
                       ▼
   S3042                NO  ╱───────────╲  S3041
  ┌─────────┐      ◄────────┤   i = N?   ├
  │ i = i + 1 │              ╲───────────╱
  └─────────┘                   │ YES
                       ▼
      ┌──────────────────────────────────┐
      │   i = 0, j = –N, k = 0, l = 0     │──── S3070
      └──────────────────────────────────┘
                       │
                       ▼
      ┌──────────────────────────────────┐
      │        REPEAT S304 TO S306        │──── S307
      └──────────────────────────────────┘
                       │
                       ▼
   S3072                NO  ╱───────────╲  S3071
  ┌─────────┐      ◄────────┤   j = N?   ├
  │ j = j + 1 │              ╲───────────╱
  └─────────┘                   │ YES
                       ▼
      ┌──────────────────────────────────┐
      │   i = 0, j = 0, k = –N, l = 0     │──── S3080
      └──────────────────────────────────┘
                       │
                       ▼
      ┌──────────────────────────────────┐
      │        REPEAT S304 TO S306        │──── S308
      └──────────────────────────────────┘
                       │
                       ▼
   S3082                NO  ╱───────────╲  S3081
  ┌─────────┐      ◄────────┤   k = N?   ├
  │ k = k + 1 │              ╲───────────╱
  └─────────┘                   │ YES
                       ▼
      ┌──────────────────────────────────┐
      │   i = 0, j = 0, k = 0, l = –N     │──── S3090
      └──────────────────────────────────┘
                       │
                       ▼
      ┌──────────────────────────────────┐
      │        REPEAT S304 TO S306        │──── S309
      └──────────────────────────────────┘
                       │
                       ▼
   S3092                NO  ╱───────────╲  S3091
  ┌─────────┐      ◄────────┤   l = N?   ├
  │ l = l + 1 │              ╲───────────╱
  └─────────┘                   │ YES
                       ▼
      ┌──────────────────────────────────┐
      │       DERIVE ERROR FUNCTION       │──── S310
      └──────────────────────────────────┘
                       │
                       ▼
                    (  END  )
```

FIG. 4

```
                          ┌──────────┐
                          │  START   │
                          └──────────┘
                               │
                               ▼
              ┌──────────────────────────────────┐
              │        SET REFERENCE LENS         │──── S401
              └──────────────────────────────────┘
                               │
                               ▼
              ┌──────────────────────────────────┐
              │  MEASURE SHAPE MEASUREMENT ERROR  │──── S402
              └──────────────────────────────────┘
                               │
                               ▼
              ┌──────────────────────────────────┐
              │     CALCULATE PLACEMENT ERROR     │──── S403
              └──────────────────────────────────┘
                               │
                               ▼
              ┌──────────────────────────────────┐
              │    i = −N, j = 0, k = 0, l = 0    │──── S4040
              └──────────────────────────────────┘
                               │
              ┌───────────────►│
              │                ▼
              │  ┌──────────────────────────────────┐
              │  │   MOVE REFERENCE PLANE TO Δx_{i,j,k,l}  │──── S404
              │  └──────────────────────────────────┘
              │                │
              │                ▼
              │  ┌──────────────────────────────────┐
              │  │  MEASURE SHAPE OF REFERENCE SURFACE │──── S405
              │  └──────────────────────────────────┘
              │                │
   S4042      │                ▼
     ┌──────────┐   NO   ◇──────────────◇ ──── S4041
     │ i = i + 1│◄───────│    i = N?     │
     └──────────┘        ◇──────────────◇
                               │ YES
                               ▼
              ┌──────────────────────────────────┐
              │    i = 0, j = −N, k = 0, l = 0    │──── S4060
              └──────────────────────────────────┘
                               │
              ┌───────────────►│
              │                ▼
              │  ┌──────────────────────────────────┐
              │  │        REPEAT S404 TO S405        │──── S406
              │  └──────────────────────────────────┘
   S4062      │                │
     ┌──────────┐   NO   ◇──────────────◇ ──── S4061
     │ j = j + 1│◄───────│    j = N?     │
     └──────────┘        ◇──────────────◇
                               │ YES
                               ▼
              ┌──────────────────────────────────┐
              │    i = 0, j = 0, k = −N, l = 0    │──── S4070
              └──────────────────────────────────┘
                               │
              ┌───────────────►│
              │                ▼
              │  ┌──────────────────────────────────┐
              │  │        REPEAT S404 TO S405        │──── S407
              │  └──────────────────────────────────┘
   S4072      │                │
     ┌──────────┐   NO   ◇──────────────◇ ──── S4071
     │ k = k + 1│◄───────│    k = N?     │
     └──────────┘        ◇──────────────◇
                               │ YES
                               ▼
              ┌──────────────────────────────────┐
              │    i = 0, j = 0, k = 0, l = −N    │──── S4080
              └──────────────────────────────────┘
                               │
              ┌───────────────►│
              │                ▼
              │  ┌──────────────────────────────────┐
              │  │        REPEAT S404 TO S405        │──── S408
              │  └──────────────────────────────────┘
   S4082      │                │
     ┌──────────┐   NO   ◇──────────────◇ ──── S4081
     │ l = l + 1│◄───────│    l = N?     │
     └──────────┘        ◇──────────────◇
                               │ YES
                               ▼
              ┌──────────────────────────────────┐
              │       DERIVE ERROR FUNCTION       │──── S409
              └──────────────────────────────────┘
                               │
                               ▼
                          ┌──────────┐
                          │   END    │
                          └──────────┘
```

FIG. 5

START

ALIGN REFERENCE LENS — S501

$i = -N, j = 0, k = 0, l = 0$ — S5020

MOVE REFERENCE PLANE TO $\Delta x_{i, j, k, l}$ — S502

MEASURE SHAPE OF REFERENCE SURFACE — S503

S5022    $i = i + 1$    NO    $i = N?$ — S5021

YES

$i = 0, j = -N, k = 0, l = 0$ — S5040

REPEAT S502 TO S503 — S504

S5042    $j = j + 1$    NO    $j = N?$ — S5041

YES

$i = 0, j = 0, k = -N, l = 0$ — S5050

REPEAT S502 TO S503 — S505

S5052    $k = k + 1$    NO    $k = N?$ — S5051

YES

$i = 0, j = 0, k = 0, l = -N$ — S5060

REPEAT S502 TO S503 — S506

S5062    $l = l + 1$    NO    $l = N?$ — S5061

YES

SET LENS TO BE MEASURED — S507

CALCULATE DATA OF SURFACE SHAPE TO BE MEASURED — S508

CALCULATE PLACEMENT COMPONENTS — S509

CALCULATE SHAPE MEASUREMENT ERROR — S510

CORRECT DATA OF SURFACE SHAPE TO BE MEASURED — S511

END

Europäisches
Patentamt

European
Patent Office

Office européen
des brevets

## EUROPEAN SEARCH REPORT

Application Number

EP 15 18 1066

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/158357 A1 (FURUKAWA YASUNORI [JP] ET AL) 21 June 2012 (2012-06-21) <br> * paragraph [0011] - paragraph [0138]; figures 1-17 * | 1-16 | INV. <br> G01B11/24 <br> G01B21/04 |
| X | JOHANNES PFUND, NORBERT LINDLEIN, AND JOHANNES SCHWIDER: "Non-null testing of aspherical surfaces by using a Shack-Hartmann sensor", OPTICAL FABRICATION AND TESTING 2000, OSA PUBLISHING, CONFERENCE PAPERS, OFT, 2000, OTUC, PAGE OTUC5, 18 June 2000 (2000-06-18), pages 112-114, XP002753192, Quêbec City Canada ISBN: 1-55752-637-0 <br> * the whole document * | 1-16 | |
| A | US 2007/206204 A1 (JIA PEIRONG [CA] ET AL) 6 September 2007 (2007-09-06) <br> * paragraph [0139] * | 1-16 | |
| A | US 2013/024158 A1 (OSHIMA YUKI [JP]) 24 January 2013 (2013-01-24) <br> * claim 6 * | 1-16 | TECHNICAL FIELDS SEARCHED (IPC) <br><br> G01B |

The present search report has been drawn up for all claims

| Place of search | Date of completion of the search | Examiner |
|---|---|---|
| Munich | 20 January 2016 | Malcoci, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 1066

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2016

| Patent document cited in search report | | Publication date | Patent family member(s) | | Publication date |
|---|---|---|---|---|---|
| US 2012158357 | A1 | 21-06-2012 | CN | 102538701 A | 04-07-2012 |
| | | | JP | 5721420 B2 | 20-05-2015 |
| | | | JP | 2012132682 A | 12-07-2012 |
| | | | KR | 20120068702 A | 27-06-2012 |
| | | | US | 2012158357 A1 | 21-06-2012 |
| US 2007206204 | A1 | 06-09-2007 | CA | 2528791 A1 | 01-06-2007 |
| | | | US | 2007206204 A1 | 06-09-2007 |
| US 2013024158 | A1 | 24-01-2013 | JP | 5300929 B2 | 25-09-2013 |
| | | | JP | 2013024781 A | 04-02-2013 |
| | | | US | 2013024158 A1 | 24-01-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2012132682 A